# EUROPÄISCHE PATENTSCHRIFT

(11) **EP 2 247 441 B1**
(45) Veröffentlichungstag und Bekanntmachung des Hinweises auf die Patenterteilung: **08.04.2020**
(21) Anmeldenummer: 09714523.9
(22) Anmeldetag: 23.02.2009
(51) Int. Cl.: B32B 5/18, B32B 27/40, B60R 13/02, A47C 27/00

(54) **MEHRSCHICHTIGES VERBUNDMATERIAL, SEINE HERSTELLUNG UND VERWENDUNG**
MULTI-LAYER COMPOSITE MATERIAL, PRODUCTION AND USE THEREOF
MATÉRIAU COMPOSITE MULTICOUCHE, FABRICATION ET UTILISATION ASSOCIÉES

(30) Priorität: 27.02.2008 EP 08102072
(43) Veröffentlichungstag der Anmeldung: 10.11.2010
(73) Patentinhaber: BASF SE, 67056 Ludwigshafen am Rhein (DE)
(72) Erfinder: JOKISCH, Carl, 68259 Mannheim (DE); WEISER, Jürgen, 69198 Schriesheim (DE); RUDOLF, Peter, 68526 Ladenburg (DE)
(74) Vertreter: BASF IP Association
(86) Internationale Anmeldenummer: PCT/EP2009/052103
(87) Internationale Veröffentlichungsnummer: WO 2009/106496

(56) Entgegenhaltungen:
- EP-A- 0 373 515
- EP-B- 1 242 015
- WO-A-2005/065604
- WO-A1-2005/047549
- WO-A1-2007/023085
- DE-A1-102005 045 047
- DE-A1-102006 037 415
- DE-T2- 69 826 484
- DE-U1-202004 019 330
- US-A- 5 043 209
- US-A1- 2002 119 300
- US-A1- 2006 149 200

## Beschreibung

Die vorliegende Erfindung betrifft ein mehrschichtiges Verbundmaterial, umfassend als Komponenten:
(A) ein textiles Flächengebilde,
(B) ein Material, welches Wasser oder wässrige Flüssigkeiten absorbieren kann,
(C) mindestens eine Verbindungsschicht aus Polyurethanen mit einer Glastemperatur unter 0°C, und
(D) eine Polyurethanschicht, die Kapillaren aufweist, die über die gesamte Dicke der Polyurethanschicht gehen,
wobei die Polyurethanschicht (D) an mindestens einer Stelle direkt mit Flächengebilde (A) oder absorptionsfähigem Material (B) in Berührung kommt,
wobei die Polyurethanschicht (D) eine Dicke von 15 bis 300 µm aufweist und eine Musterung aufweist,
wobei es sich bei Material (B), welches Wasser oder wässrige Flüssigkeiten absorbieren kann, um einen Superabsorber (B) handelt, und
wobei es sich bei dem Superabsorber (B) um ein organisches Copolymer handelt, das auf Flächengebilde (A) aufpolymerisiert ist.

Weiterhin betrifft die vorliegende Erfindung ein Verfahren zur Herstellung von erfindungsgemäßen mehrschichtigen Verbundmaterialien. Außerdem betrifft die vorliegende Erfindung die Verwendung von erfindungsgemäßen mehrschichtigen Verbundmaterialien, beispielsweise im Innenraum von Fahrzeugen, zur Herstellung von Sitzen und zum Raumklimamanagement.

Zellstofftücher können in vielen Fällen gut Wasser oder wässrige Flüssigkeiten absorbieren. Ein noch vielseitigerer Einsatz als bereits heute scheitert jedoch in vielen Fällen daran, dass feuchte Zellstofftücher unansehnlich sind und nur eine äußerst geringe mechanische Festigkeit aufweisen.

Superabsorber, in ihrer Ausprägung als superabsorbierende Polymere (SAP) bekannt, finden Anwendung in zahlreichen Produkten, die große Mengen Flüssigkeit, insbesondere Körperflüssigkeit aufsaugen sollen, beispielsweise in Windeln. Viele dieser Produkte haben jedoch den Nachteil, dass sie von außen nicht gefällig wirken. Sie können rasch verschmutzen, beispielsweise durch Verstauben, und sehen dann schmuddelig aus. Bei vielen dieser Produkte handelt es sich daher um Wegwerfprodukte.

Gegen einen dauerhaften Einsatz von Superabsorbern spricht außerdem, dass diese in vielen Varianten kein gefälliges Aussehen haben.

Es bestand also die Aufgabe, ein Material bereit zu stellen, das gute Flüssigkeitsabsorbierende Eigenschaften kombiniert mit einem gefälligen Aussehen. Außerdem soll das Material äußerlich gut zu reinigen sein.

Dem entsprechend wurden die eingangs definierten mehrschichtigen Verbundmaterialien gefunden.

Erfindungsgemäße mehrschichtige Verbundmaterialien umfassen als Komponente
(A) ein Flächengebilde, wobei es sich bei Flächengebilde (A) um ein textiles Flächengebilde, im Rahmen der vorliegenden Erfindung auch als textiles Flächengebilde (A) oder kurz als Textil (A) bezeichnet, handelt. Unter Textil (A) wird im Rahmen der vorliegenden Erfindung beispielsweise Flächengebilde wie zum Beispiel Filze, Gewebe, Gewirke, Strickwaren, Gelege, Vliesstoffe (Non-wovens) und Watten verstanden. Textil (A) kann natürlichen Ursprungs sein, beispielsweise Baumwolle, Wolle oder Flachs, oder synthetisch, beispielsweise Polyamid, Polyester, modifizierte Polyester, Polyestermischgewebe, Polyamidmischgewebe, Polyacrylnitril, Triacetat, Acetat, Polycarbonat, Polyolefine wie beispielsweise Polyethylen und Polypropylen, Polyvinylchlorid, weiterhin Mikrofasern und Mikrohohlfasern wie beispielsweise Polyestermikrofasern und Glasfasergewebe. Besonders bevorzugt sind Polyester, Baumwolle und Polyolefine wie beispielsweise Polyethylen und Polypropylen sowie ausgewählte Mischgewebe, gewählt aus Baumwolle-Polyester-Mischgewebe, Polyolefin-Polyester-Mischgewebe und Polyolefin-Baumwolle-Mischgewebe. Ganz besonders bevorzugte Ausführungsformen von Textil (A) sind Gewebe und Vliesstoffe aus Polyester.

Erfindungsgemäße mehrschichtige Verbundmaterialien umfassen weiterhin
(B) ein Material, welches Wasser oder wässrige Flüssigkeiten absorbieren kann,
das im Rahmen der vorliegenden Anmeldung auch kurz als absorptionsfähiges Material (B) bezeichnet wird.

Unter Wasser und wässrigen Flüssigkeiten ist insbesondere Wasser in gasförmigem Aggregatszustand zu verstehen, beispielsweise als Feuchtigkeit, ganz besonders bevorzugt Luftfeuchtigkeit.

In der vorliegenden Erfindung handelt es sich bei absorptionsfähigem Material (B) um einen Superabsorber, der im Rahmen der vorliegenden Erfindung auch als Superabsorber (B) bezeichnet wird. Bei Superabsorber (B) handelt es sich im Rahmen der vorliegenden Erfindung um einen Stoff, der ein vielfaches seines Eigengewichts, beispielsweise das bis zu Tausendfache, an Flüssigkeit aufsaugen kann, wobei Flüssigkeiten insbesondere wässrige Flüssigkeiten bedeuten, beispielsweise wässrige Körperflüssigkeiten wie Blut, Urin oder Schweiß und natürlich Wasser.

Bei Superabsorber (B) handelt es sich um ein synthetisches organisches Copolymer mit superabsorbierenden Eigenschaften. Bei synthetischen organischen Copolymeren mit superabsorbierenden Eigenschaften, im folgenden auch superabsorbierende Polymere (SAP) oder superabsorbierende Copolymere (B) genannt, handelt es sich vorzugsweise um Copolymere, die durch Copolymerisation von mindestens zwei Superabsorber- bzw. SAP-bildenden Monomeren hergestellt werden.

Unter Superabsorber- bzw. SAP-bildenden Monomeren sind im Rahmen der vorliegenden Anmeldung solche polymerisierbare Verbindungen zu verstehen, die zu der Saugfähigkeit der daraus gebildeten Copolymere beitragen. Beispiele sind monoethylenisch ungesättigte Verbindungen bzw. Verbindungen mit einer polymerisierbaren Doppelbindung mit mindestens einem hydrophilen Rest, wie Carboxyl-, Carbonsäureanhydrid-, Carbonsäuresalz-, Sulfonsäure-, Sulfonsäuresalz-, Hydroxy-, Ether-, Amid-, Amino- oder quartäre Ammoniumsalzgruppen. Geeignete Superabsorber- bzw. SAP-bildende Monomere sind zum Beispiel:
1. carboxylgruppenhaltige Monomere: monoethylenisch ungesättigte Mono- oder Polycarbonsäuren wie (Meth)acrylsäure, Maleinsäure, Fumarsäure, Crotonsäure, Sorbinsäure und Itaconsäure;
2. carbonsäureanhydridgruppenhaltige Monomere: monoethylenisch ungesättigte Polycarbonsäureanhydride wie Maleinsäureanhydrid;
3. carbonsäuresalzhaltige Monomere: wasserlösliche Salze (Alkalisalze, Ammoniumsalze, Aminsalze usw.) monoethylenisch ungesättigter Mono- oder Polycarbonsäuren wie Natrium(meth)acrylat, Trimethylamin(meth)acrylat, Triethanolamin(meth)acrylat, Natriummaleat, Methylaminmaleat;
4. sulfonsäuregruppenhaltige Monomere: aliphatische oder aromatische Vinylsulfonsäuren wie Vinylsulfonsäure, Allylsulfonsäure, Vinyltoluolsulfonsäure, Styrolsulfonsäure), (Meth)acrylsulfonsäure, Sulfopropyl(meth)acrylat, 2-Hydroxy-3-(meth)acryloxy-propylsulfonsäure);
5. sulfonsäuresalzgruppenhaltige Monomere: Alkalisalze, Ammoniumsalze, Aminsalze von sulfonsäuregruppenhaltigen Monomeren wie oben erwähnt;
6. hydroxygruppenhaltige Monomere: monoethylenisch ungesättigte Alkohole wie (Meth)allylalkohol, monoethylenisch ungesättigte Ether oder Ester von Polyolen, beispielsweise von Alkylenglykolen, Glycerin, Polyoxyalkylenpolyolen, wie Hydroxyethyl(meth)acrylat, Triethylenglykol(meth)acrylat, Poly(oxyethylenoxypropylen)-glykolmono(meth)allylether, wobei die Hydroxygruppen gegebenenfalls verethert oder verestert sind;
7. amidgruppenhaltige Monomere: Vinylformamid, (Meth)acrylamid, N-Alkyl(meth)acrylamide wie N-Methacrylamid, N-Hexylacrylamid, weiterhin N,N-Dialkyl(meth)acrylamide wie N,N-Dimethylacrylamid oder N,N-Di-n-propylacrylamid, N-Hydroxyalkyl(meth)acrylamide wie N-Methylol(meth)acrylamid oder N-Hydroxyethyl(meth)acrylamid, N,N-Dihydroxyalkyl(meth)acrylamide wie N,N-Dihydroxyethyl(meth)acrylamid] Vinyllactame wie N-Vinylpyrrolidon;
8. aminogruppenhaltige Monomere: Aminogruppenhaltige Ester, z.B. Dialkylaminoalkylester, Dihydroxyalkylaminoalkylester, Morpholinoalkylester, monoethylenisch ungesättigte Mono- oder Dicarbonsäuren wie Dimethylaminoethyl(meth)acrylat, Diethylaminoethyl(meth)acrylat, Morpholinoethyl(meth)acrylat oder Dimethylaminoethylfumarat, heterocyclische Vinylverbindungen wie Vinylpyridine, z.B. 2-Vinylpyridin, 4-Vinylpyridin, N-Vinylpyridin, außerdem N-Vinylimidazol; sowie
9. quartäre Ammoniumsalzgruppen enthaltende Monomere: beispielsweise N,N,N-Trialkyl-N-(meth)acryloyloxyalkylammoniumsalze wie N,N,N-Trimethyl-N-(meth)acryloyl-oxyethylammoniumchlorid, N,N,N-Triethyl-N-(meth)acryloyloxyethylammonium-chlorid, 2-Hydroxy-3-(meth)acryloyloxypropyltrimethylammoniumchlorid, und Monomere gemäß GB-PS 1,034,296.

Zu anstelle von oder in Verbindung mit den SAP-bildenden Monomeren geeigneten Monomeren, die durch Hydrolyse wasserlöslich werden, zählen monoethylenisch ungesättigte Verbindungen mit mindestens einer hydrolysierbaren Gruppe, wie Estern, Amid- und Nitrilgruppen. Zu solchen Monomeren mit einer Estergruppe zählen zum Beispiel C₁-C₄-Alkylester monoethylenisch ungesättigter Carbonsäuren wie Methyl(meth)acrylat und Ethyl(meth)acrylat und weiterhin 2-Ethylhexyl(meth)acrylat sowie Ester monoethylenisch ungesättigter Alkohole [Vinylester, (Meth)allylester usw.] wie Vinylacetat und (Meth)allylacetat. Zu geeigneten nitrilgruppenhaltigen Monomeren zählt (Meth)acrylnitril.

In einer Ausführungsform der vorliegenden Erfindung handelt es sich bei SAP-bildenden Monomeren um wasserlösliche Monomere, die beispielsweise bei 20°C eine Löslichkeit von mindestens 5 g/l in destilliertem Wasser aufweisen können.

Unter diesen wasserlöslichen oder durch Hydrolyse wasserlöslichen Monomeren sind wasserlösliche Monomere, die nach Polymerisation keine Hydrolyse erfordern, aufgrund der leichten Verfahrensführung bei der Herstellung von absorptionsfähigen Materialien (B) bevorzugt. Ferner sind als wasserlösliche Monomere herstellungsbedingt absorptionsfähigen Materialien (B) mit hoher Wasserabsorption carboxylgruppenhaltige Monomere wie (Meth)acrylsäure und Maleinsäureanhydrid; carbonsäuresalzgruppenhaltige Monomere wie Natrium(meth)acrylat, Trimethylamin(meth)acrylat und Triethanolamin(meth)acrylat und quartäre Ammoniumsalzgruppen enthaltende Monomere wie N,N,N-Trimethyl-N-(meth)acryloyloxyethylammoniumchlorid bevorzugt.

Zu ganz besonders bevorzugten superabsorberbildenden Monomeren zählen zum Beispiel Acrylsäure, Methacrylsäure, Maleinsäure, Fumarsäure, Crotonsäure, Sorbinsäure, Itaconsäure, Zimtsäure, Vinylsulfonsäure, Allylsulfonsäure, Vinyltoluolsulfonsäure, Styrolsulfonsäure, Sulfo(meth)acrylat, Sulfopropyl(meth)acrylat, 2-Acrylamid-2-methylpropansulfonsäure, 2-Hydroxyethyl(meth)acryloylphosphat, Phenyl-2-acryloyloxyethylphosphat, deren Natrium-, Kalium- und Ammoniumsalze, Maleinsäureanhydrid und deren Kombinationen, beispielsweise als freie Säure oder mindestens partiell neutralisiert, vorzugsweise zu 1 bis 100 mol-%, besonders bevorzugt 10 bis 80 mol-% und ganz besonders bevorzugt 15 bis 75 mol-% neutralisiert ist. Ganz besonders bevorzugt handelt es sich bei dem Superabsorber bildenden Monomer um neutralisierte Acrylsäure.

Superabsorber (B) liegt vorzugsweise in Form von Partikeln vor.

Bei Superabsorber (B) in partikulärer Form, im Rahmen der vorliegenden Erfindung auch SAP-Teilchen genannt, handelt es sich um leichtvernetzte Polymere in partikulärer Form, die aus mindestens einem der vorstehend genannten SAP-bildenden Monomere und mindestens einem internen Vernetzer hergestellt werden. die so erhältlichen Polymere sind hochsaugfähig. Bevorzugte SAP-Teilchen sind im Durchschnitt ausreichend klein, dass sie leicht durch Sprühtrocknung hergestellt oder durch Versprühen verarbeitet werden können, vorzugsweise mit einem Durchmesser kleiner als 150 µm, besonders bevorzugt kleiner als 100 µm. Eine solche Morphologie kann man direkt als Ergebnis des Polymerisationsverfahrens erhalten, oder man kann die hochsaugfähigen Polymere auch durch Sieben, Mahlen, Pulverisieren, Reiben oder eine Kombination davon auf die gewünschte mittlere Teilchengröße der SAP-Teilchen bringen. Der mittlere Durchmesser der SAP-Teilchen liegt zum Beispiel im Bereich von 10 bis 130 µm, vorzugsweise von 15 bis 100 µm und ganz besonders bevorzugt von 40 bis 90 µm.

Um Partikel von Superabsorber (B) herzustellen, copolymerisiert man in vielen Ausführungsformen mindestens ein SAP-bildendes Monomer mit mindestens einem Vernetzer.

Die Herstellung von Partikeln von Superabsorber (B) erfolgt aus einem oder mehreren SAP-bildenden Monomer und mindestens einer intern vernetztenden Verbindung, auch als interner Vernetzer bezeichnet wird, wobei die Partikel von Superabsorber (B) bevorzugt zu 50 bis 99,9 Molprozent aus SAP-bildendem Monomer bzw. SAP-bildenden Monomeren gebildet werden. Durch den zusätzlichen Einsatz von internem Vernetzer erhält man Partikel von Superabsorber (B), die ein leicht vernetztes Polymer umfassen.

Dabei erfolgt die Vernetzung im wesentlichen einheitlich über das ganze Partikel von Superabsorber (B) erfolgt. Geeignete interne Vernetzer sind solche Verbindungen mit zwei oder mehr mit den monoethylenisch ungesättigten Monomeren reaktionsfähigen Gruppen, die mindestens teilweise in Wasser oder einer wässrigen Monomermischung löslich oder dispergierbar sind. Die interne Vernetzer kann gewählt werden aus einem ungesättigten Monomeren wie Divinylbenzol, einer Verbindung mit mindestens zwei gegenüber einem monoethylenisch ungesättigten Monomer reaktionsfähigen funktionellen Gruppen wie Ethylendiamin, einer Verbindung mit mindestens einer ungesättigten Bindung und mindestens einer reaktionsfähigen funktionellen Gruppe wie Glycidyl-(meth)acrylat.

Beispielhafte interne Vernetzer sind: Tetraallyloxyethan, N,N'-Methylenbisacrylamid, N,N'-Methylenbismethacrylamid, Triallylamin, Trimethylolpropantriacrylat, Glycerinpropoxytriacrylat, Divinylbenzol, N-Methylolacrylamid, N-Methylolmethacrylamid, Glycidylmethacrylat, Polyethylenpolyamine, Ethylendiamin, Ethylenglykol und Glycerin. Bevorzugte interne Vernetzer sind solche mit mindestens zwei Allylgruppen, ganz besonders bevorzugt drei oder vier Allylgruppen. Bevorzugte interne Vernetzer sind Tetraallyloxyethan und der Triallylether des Pentaerythrits. Die erfindungsgemäß eingesetzte Menge des internen Vernetzers richtet sich nach dem internen Vernetzer und dem Polymerisationsverfahren. In der Regel liegt die Menge des internen Vernetzers bei etwa 0,005 bis etwa 1,0 Mol-Prozent, bezogen auf Mol des SAP-bildenden Monomers.

Bei der Herstellung von Partikeln von Superabsorber (B) fakultativ eingesetzte Komponenten sind wasserlösliche hydroxygruppenhaltige Polymere wie Polysaccharide und Vinyl- oder Acrylpolymere. Beispiele für wasserlösliche Polysaccharide sind Stärken, wasserlösliche Cellulosen und Polygalactomannane. Zu geeigneten Stärken zählen die nativen Stärken, wie Süßkartoffelstärke, Kartoffelstärke, Weizenstärke, Maisstärke, Reisstärke, Tapiokastärke und dergleichen. Geeignet sind auch veredelte oder modifizierte Stärken, wie Dialdehydstärke, mit Alkylalkoholen veretherte Stärke, insbesondere mit Methanol veretherte Stärke, allyletherifizierte Stärke, oxyalkylierte Stärke, aminoethyletherifizierte Stärke und cyanomethyletherifizierte Stärke. Weiterhin eignen sich Polyvinylalkohol und Polyvinylalkoholcopolymere.

Als wasserlösliche Cellulose eignet sich aus solchen Quellen wie Holz, Stängeln, Bast, Samenflusen und dergleichen gewonnene Cellulose, die dann zu Hydroxyalkylcellulose, Carboxymethylcellulose, Methylcellulose und dergleichen derivatisiert wird.

Geeignete Polygalactomannane sind Guargummi und Johannisbrotkernmehl sowie deren Hydroxyalkyl-, Carboxyalkyl- und Aminoalkylderivate. Zu wasserlöslichen Vinyl- und Acrylpolymeren zählen Polyvinylalkohol und Polyhydroxyethylacrylat. Bevorzugtes Polysaccharid ist native Stärke, wie Weizenstärke, Maisstärke und Alphastärken. Diese gegebenenfalls vorgefertigten hydroxygruppenhaltigen Polymere können in einer Menge von 1 bis 15 Gew.-%, bevorzugt von 1 bis 10 Gew.-% und ganz besonders bevorzugt 5 Gew.-% eingesetzt werden, bezogen auf Feststoffanteil von absorptionsfähigem Material (B).

Partikel von Superabsorber (B) können nach an sich bekannten Polymerisationsverfahren hergestellt werden. Die Polymerisation erfolgt in Gegenwart von beispielsweise Redoxinitiatoren und thermischen Initiatoren. Man kann primär mit den Redoxinitiatoren arbeiten, wobei die thermischen Polymerisationsinitiatoren gegebenenfalls erst dann eingesetzt werden, um den Restmonomergehalt des Polymerisationsendproduktes auf unter 0,1 Gewichtsprozent zu drücken. Gegebenenfalls können thermische Initiatoren oder Redoxinitiatoren als alleiniges Initiatorensystem eingesetzt werden. Beispiele für verschiedene Initiatorensysteme finden sich in der US 4,497,930, in der ein Zweikomponenteninitiatorensystem aus Persulfat und Hydroperoxid beschrieben ist, sowie in der US 5,145,906, in der ein Dreikomponenteninitiatorensystem, d.h. Redoxsystem plus thermischer Initiator, offenbart ist.

Partikel von Superabsorber (B) kann man nach dem Verfahren der Lösungs- oder Umkehrsuspensionspolymerisation oder nach einem geeigneten Substanzpolymerisationsverfahren herstellen. Die Lösungspolymerisations- und Umkehrpolymerisationsverfahren sind in der Technik an sich bekannt, siehe zum Beispiel die US-Patentschriften 4,076,663; 4,286,082; 4,654,039 und 5,145,906, in denen das Lösungspolymerisationsverfahren beschrieben ist, und die US-Patentschriften 4,340,706; 4,497,930; 4,666,975; 4,507,438 und 4,683,274, in denen das Umkehrsuspensionspolymerisationsverfahren beschrieben ist.

In einer Ausführungsform der vorliegenden Erfindung sind absorptionsfähiges Material (B) und insbesondere Superabsorber (B) mit Flächengebilde (A) physikalisch oder chemisch verbunden. Dabei kann man die Art der physikalischen oder chemischen Verbindung von absorptionsfähigem Material (B) und insbesondere Superabsorber (B) mit Flächengebilde (A) nach den geometrischen Abmessungen von absorptionsfähigem Material (B) und insbesondere Superabsorber (B) wählen. So ist es beispielsweise möglich, das absorptionsfähiges Material (B) an das Flächengebilde (A) geheftet oder geklebt wird. In einer anderen Variante gestaltet man absorptionsfähiges Material (B) und insbesondere Superabsorber (B) in Form von Partikeln, beispielsweise granulären oder sphärischen Partikeln, mit einem mittleren Durchmesser (Zahlenmittel) im Bereich von 1 µm bis 1 cm, bevorzugt 10 µm bis 1 mm, und lagert sie in die Poren von Flächengebilde ein. In einer anderen Variante gestaltet man absorptionsfähiges Material (B) und insbesondere Superabsorber (B) in Form von Partikeln, beispielsweise granulären oder sphärischen

Partikeln, mit einem mittleren Durchmesser (Zahlenmittel) im Bereich von 1 µm bis 1 cm, bevorzugt 10 µm bis 1 mm, und fixiert sie mit Hilfe eines Bindemittels oder eines Klebstoffs an Flächengebilde (A).

In der vorliegenden Erfindung kann man Superabsorber (B) in Gegenwart von textilem Flächengebilde (A) herstellen. In der vorliegenden Erfindung kann man Superabsorber (B) auf Flächengebilde (A) aufpolymerisieren, beispielsweise indem man die (Co)polymerisation ganz oder zeitweise in Gegenwart von Flächengebilde (A) durchführt. So ist es beispielsweise möglich, eine Mischung von einem oder mehreren SAP-bildenden Monomeren mit Wasser und einem oder mehreren Initiatoren herzustellen und auf ein textiles Flächengebilde aufzutragen. Danach löst man die (Co)polymerisation aus. In einer anderen Ausführungsform geht man so vor, dass man zunächst eine Mischung von einem oder mehreren SAP-bildenden Monomeren, Wasser und einem oder mehreren Initiatoren herstellt und danach die (Co)polymerisation auslöst. Nach einer gewissen Zeit dann fügt man Flächengebilde (A) zu oder trägt die reagierende Mischung auf textiles Flächengebilde auf und führt danach die (Co)polymerisation zu Ende.

In einer bevorzugten Variante der vorliegenden Erfindung kann man Superabsorber (B) in Gegenwart von textilem Flächengebilde (A) fertig stellen. Dazu ist es beispielsweise möglich, eine Mischung von einem oder mehreren SAP-bildenden Monomeren mit Superabsorber (B) in partikulärer Form, Wasser und einem oder mehreren Initiatoren zu mischen und auf ein textiles Flächengebilde aufzutragen. Danach löst man die (Co)polymerisation aus.

Dazu kann man beispielsweise so vorgehen, dass man eine Polymerisationsmischung, enthaltend Partikel von Superabsorber (B) mit SAP-bildendem Monomer, Wasser und einem oder mehreren Initiatoren auf Flächengebilde (A) aufbringt, beispielsweise aufsprüht, aufklotzt oder aufgießt, und dann die Polymerisation auslöst.

Partikel von Superabsorber (B) sind in der Polymerisationsmischung vorzugsweise zu etwa 1 bis 20 Gewichtsprozent, vorzugsweise zu 2 bis 15 Gewichtsprozent und ganz besonders bevorzugt zu 5 bis 10 Gewichtsprozent enthalten. Es hat sich gezeigt, dass bei einem zu hohen Gehalt an SAP-Teilchen es in der Polymerisationsmischung in einigen Fällen zu einer vorzeitigen Polymerisation kommen kann.

In einer Ausführungsform der vorliegenden Erfindung hat die Polymerisationsmischung eine Viskosität von mindestens 20 mPa· s, gemessen bei 20°C in dem Viskosimeter Brookfield, Spindel 02, 20 UpM.

Die Polymerisationsmischung kann zusätzlich ein Vernetzungsmittel und/oder einen Weichmacher und/oder mindestens ein geruchsbindendes Mittel und/oder ein Hautpflegemittel, wie zum Beispiel Panthotenol, Aloe vera, mit einem pH-Wert-Bereich, der dem der Haut entspricht, enthalten. Alternativ dazu können die in der Polymerisationsmischung enthaltenen SAP-Teilchen mindestens ein geruchsbindendes Mittel und/oder ein Hautpflegemittel, wie zum Beispiel Panthotenol, Aloe vera, mit einem pH-Wert-Bereich, der dem der Haut entspricht, enthalten.

Die Akquisitionsschicht und die Speicherschicht des Saugkörpers weisen beispielsweise einen pH-Wert von 2,0 bis 7,5 und vorzugsweise von 4,0 bis 6,5 auf. Nach einer bevorzugten Ausführungsform der Erfindung haben Akquisitionsschicht und Speicherschicht einen unterschiedlichen pH-Wert. So kann z.B. der pH-Wert der Akquisitionsschicht bei 4,0 bis 6,5 und vorzugsweise bei 4,2 bis 4,5 und der der Speicherschicht bei 5,0 bis 6,0 liegen.

Nach einer weiteren bevorzugten Ausführungsform der Erfindung bestehen die Superabsorberteilchen aus MBIE-Superabsorberteilchen oder Mehrbereichskompositionen von Superabsorberteilchen, wie z.B. in WO 99/25393 beschrieben, mit vorzugsweise einem Verhältnis von SAP anionisch zu kationisch von etwa 5:1 bis etwa 1:5.

Weitere Varianten, nach denen man Superabsorber (B) mit textilem Flächengebilde (A) verbinden kann, sind in den Schriften WO 03/053487, EP 0 764 223, US 7,115,321 und EP 1 178 149 WO 2004/039493 beschrieben.

In einer Variante handelt es sich bei der Kombination aus textilem Flächengebilde (A) und absorptionsfähigem Material (B) Fasern von Superabsorber (B), die zusammen mit Fasern aus anderem Material zu einem Vliesstoff verarbeitet werden, wie in WO 2004/039493 beschrieben.

In einer anderen Variante der vorliegenden Erfindung handelt es sich bei der Kombination aus textilem Flächengebilde (A) und absorptionsfähigem Material (B) um schaumförmigen Superabsorber, der auf Textil fixiert ist.

In einer Ausführungsform der vorliegenden Erfindung weisen Flächengebilde (A) und absorptionsfähiges Material (B) zusammen eine mittlere Dicke im Bereich von 100 *µ* m bis 10 mm, bevorzugt bis 1 mm auf.

Erfindungsgemäßes mehrschichtiges Verbundmaterial umfasst weiterhin
(D) mindestens eine Polyurethanschicht, die Kapillaren aufweist, die über die gesamte Dicke der Polyurethanschicht gehen, im Rahmen der vorliegenden Erfindung auch kurz als Polyurethanschicht (D) bezeichnet, wobei
die Polyurethanschicht (D) eine mittlere Dicke im Bereich von 15 bis 300 µm, bevorzugt von 20 bis 150 µm, besonders bevorzugt von 25 bis 80 µm aufweist.

Polyurethanschicht (D) weist Kapillaren auf, die über die gesamte Dicke (Querschnitt) der Polyurethanschicht (D) gehen.

In einer Ausführungsform der vorliegenden Erfindung weist Polyurethanschicht (D) im Mittel mindestens 100, bevorzugt mindestens 250 Kapillaren pro 100 cm² auf.

In einer Ausführungsform der vorliegenden Erfindung weisen die Kapillaren einen mittleren Durchmesser im Bereich von 0,005 bis 0,05 mm, bevorzugt 0,009 bis 0,03 mm auf.

In einer Ausführungsform der vorliegenden Erfindung sind die Kapillaren gleichmäßig über Polyurethanschicht (D) verteilt. In einer bevorzugten Ausführungsform der vorliegenden Erfindung sind die Kapillaren jedoch ungleichmäßig über die Polyurethanschicht (D) verteilt.

In einer Ausführungsform der vorliegenden Erfindung sind die Kapillaren im Wesentlichen gebogen. In einer anderen Ausführungsform der vorliegenden Erfindung weisen die Kapillaren einen im Wesentlichen gradlinigen Verlauf auf.

Die Kapillaren verleihen der Polyurethanschicht (D) eine Luft- und Wasserdampfdurchlässigkeit, ohne dass eine Perforierung erforderlich wäre. In einer Ausführungsform der vorliegenden Erfindung kann die Wasserdampfdurchlässigkeit der Polyurethanschicht (D) über 1,5 mg/cm²· h liegen, gemessen nach DIN 53333. So ist es möglich, dass Feuchtigkeit wie beispielsweise Schweiß durch die Polyurethanschicht (D) hindurch migrieren und von absorptionsfähigem Material (B) gebunden werden kann. Wenn die Umgebung sehr trocken ist, kann absorptionsfähiges Material die Feuchtigkeit wieder abgeben.

In einer Ausführungsform der vorliegenden Erfindung weist Polyurethanschicht (D) zusätzlich zu den Kapillaren noch Poren auf, die nicht über die gesamte Dicke der Polyurethanschicht (D) gehen.

Die Polyurethanschicht (D) weist eine Musterung auf. Die Musterung kann beliebig sein und beispielsweise die Musterung eines Leders oder einer Holzoberfläche wiedergeben. In einer Ausführungsform der vorliegenden Erfindung kann die Musterung ein Nubukleder wiedergeben.

In einer Ausführungsform der vorliegenden Erfindung weist Polyurethanschicht (D) eine samtartige Erscheinung auf.

In einer Ausführungsform der vorliegenden Erfindung kann die Musterung einer Samtoberfläche entsprechen, beispielsweise mit Härchen mit einer mittleren Länge von 20 bis 500 µm, bevorzugt 30 bis 200 µm und besonders bevorzugt 60 bis 100 µm. Die Härchen können beispielsweise einen kreisförmigen Durchmesser aufweisen. In einer besonderen Ausführungsform der vorliegenden Erfindung haben die Härchen eine kegelförmige Form.

In einer Ausführungsform der vorliegenden Erfindung weist Polyurethanschicht (D) Härchen auf, die in einem mittleren Abstand von 50 bis 350, bevorzugt 100 bis 250 µm zueinander angeordnet sind.

Für den Fall, dass die Polyurethanschicht (D) Härchen aufweist, beziehen sich die Angaben über die mittlere Dicke auf die Polyurethanschicht (D) ohne die Härchen.

Die Polyurethanschicht (D) ist mit Flächengebilde (A) oder mit absorptionsfähigem Material (B) über mindestens eine Verbindungsschicht (C) verbunden, und zwar so, dass die Polyurethanschicht (D) an mindestens einer Stelle direkt mit Flächengebilde (A) oder mit absorptionsfähigem Material (B) in Berührung kommt.

Bei Verbindungsschicht (C) kann es sich um eine durchbrochene, das heißt nicht vollflächig, ausgeprägte Schicht handeln, vorzugsweise eines gehärteten organischen Klebstoffs.

In einer Ausführungsform der vorliegenden Erfindung handelt es sich bei Verbindungsschicht (C) um eine punktförmig, streifenförmig oder gitterförmig, beispielsweise in Form von Rauten, Rechtecken, Quadraten oder einer Bienenwabenstruktur aufgebrachte Schicht. Dann kommt Polyurethanschicht (D) mit Flächengebilde (A) oder mit absorptionsfähigem Material (B) an den Lücken der Verbindungsschicht (C) in Berührung.

In der vorliegenden Erfindung handelt es sich bei Verbindungsschicht (C) um eine Schicht eines gehärteten organischen Klebstoffs auf Basis von Polyurethanen mit einer Glastemperatur unter 0°C.

Dabei kann die Härtung des organischen Klebstoffs beispielsweise thermisch, durch aktinische Strahlung oder durch Altern erfolgt sein.

In einer anderen Ausführungsform der vorliegenden Erfindung handelt es sich bei Verbindungsschicht (C) um ein Klebenetz.

In einer Ausführungsform der vorliegenden Erfindung weist die Verbindungsschicht (C) eine maximale Dicke von 100 µm, bevorzugt 50 µm, besonders bevorzugt 30 µm, ganz besonders bevorzugt 15 µm auf.

In einer Ausführungsform der vorliegenden Erfindung kann Verbindungsschicht (C) Mikrohohlkugeln enthalten. Unter Mikrohohlkugeln sind im Rahmen der vorliegenden Erfindung kugelförmige Partikel mit einem mittleren Durchmesser im Bereich von 5 bis 20 µm aus polymerem Material, insbesondre aus halogeniertem Polymer wie beispielsweise Polyvinylchlorid oder Polyvinylidenchlorid oder Copolymer von Vinylchlorid mit Vinylidenchlorid, zu verstehen. Mikrohohlkugeln können leer sein oder vorzugsweise gefüllt mit einer Substanz, deren Siedepunkt geringfügig tiefer liegt als die Zimmertemperatur, beispielsweise mit n-Butan und insbesondere mit Isobutan.

In einer Ausführungsform der vorliegenden Erfindung kann Polyurethanschicht (D) mit Flächengebilde (A) oder mit absorptionsfähigem Material (B) über mindestens zwei Verbindungsschichten (C) verbunden sein, die eine gleiche oder unterschiedliche Zusammensetzung aufweisen, und zwar so, dass die Polyurethanschicht (D) an mindestens einer Stelle direkt mit Flächengebilde (A) oder mit absorptionsfähigem Material (B) in Berührung kommt. So kann die eine Verbindungsschicht (C) ein Pigment enthalten und die andere Verbindungsschicht (C) pigmentfrei sein.

In einer Variante kann die eine Verbindungsschicht (C) Mikrohohlkugeln enthalten und die andere Verbindungsschicht (C) nicht.

In einer Ausführungsform der vorliegenden Erfindung kann erfindungsgemäßes mehrschichtiges Verbundmaterial keine weiteren Schichten aufweisen. In einer anderen Ausführungsform der vorliegenden Erfindung kann erfindungsgemäßes mehrschichtiges Verbundmaterial mindestens eine Zwischenschicht (E) umfassen, die zwischen absorptionsfähigem Material (B) und Verbindungsschicht (C), zwischen Verbindungsschicht (C) und Polyurethanschicht (D) oder zwischen zwei Verbindungsschichten (C), die gleich oder verschieden sein können, liegt. Dabei wird Zwischenschicht (E) gewählt aus Textil, Papier, Vliesstoffen, Nonwoven aus synthetischen Materialien wie Polypropylen oder Polyurethan, insbesondere Nonwoven aus thermoplastischem Polyurethan, und offenzelligem Schaumstoff, beispielsweise Melamin-Formaldehyd-Schaumstoff oder Polyurethanschaumstoff.

In den Ausführungsformen, in denen erfindungsgemäßes mehrschichtiges Verbundmaterial mindestens eine Zwischenschicht (E) aufweist, kommt Polyurethanschicht (D) vorzugsweise nicht direkt mit Flächengebilde (A) oder absorptionsfähigem Material (B) in Berührung, sondern mit Zwischenschicht (E).

In einer Ausführungsform der vorliegenden Erfindung kann Zwischenschicht (E) einen mittleren Durchmesser (Dicke) im Bereich von 0,05 mm bis 5 cm, bevorzugt 0,1 mm bis 0,5 cm, besonders bevorzugt 0,2 mm bis 2 mm aufweisen.

Vorzugsweise weist Zwischenschicht (E) eine Wasserdampfdurchlässigkeit im Bereich von größer als 1,5 mg/cm²·h auf, gemessen nach DIN 53333.

Erfindungsgemäße mehrschichtige Verbundmaterialien weisen eine hohe mechanische Festigkeit und Echtheiten auf. Weiterhin weisen sie eine hohe Wasserdampfdurchlässigkeit auf. Tropfen von verschütteter Flüssigkeit können leicht entfernt werden, beispielsweise mit einem Lappen. Außerdem weisen erfindungsgemäße mehrschichtige Verbundmaterialien ein gefälliges Aussehen und einen sehr angenehmen weichen Griff auf. Außerdem lässt sich - falls es gewünscht ist - die Kombination aus Flächengebilde (A) und absorptionsfähigem Material (B) leicht austauschen, beispielsweise durch Abtrennen und anschließendem Befestigen einer neuen Kombination aus Flächengebilde (A) und absorptionsfähigem Material (B). Vorteilhaft ist die Anwendung von erfindungsgemäßem mehrschichtigem Verbundmaterial beispielsweise in Sitzen für Transportmittel wie Boote, Automobile, Flugzeuge, Eisenbahnen, Straßenbahnen, Busse und insbesondere in Kindersitzen. Auch an weiteren Stellen im Innenraum von Fahrzeugen lässt sich erfindungsgemäßes mehrschichtiges Verbundmaterial vorteilhaft anwenden, beispielsweise bei Lenkrädern, Armlehnen, Dachhimmel, Innenraum-Verkleidungsstücken, Mittelkonsolen, Hutablagen und Armaturenbrettern. Weiterhin lässt sich erfindungsgemäßes mehrschichtiges Verbundmaterial vorteilhaft zum Raumklimamanagement verwenden. Das Raumklimamanagement wird dadurch bewirkt, dass erfindungsgemäße mehrschichtige Verbundmaterialien in feuchter Umgebung Feuchtigkeit aufnehmen (absorbieren) und in trockener Umgebung wieder abgeben (desorbieren), also für ein gleichmäßig feuchtes Klima sorgen können.

Eine weitere Verwendung von erfindungsgemäßen mehrschichtigen Verbundmaterialien sind Sportartikel, beispielsweise Sporttaschen, Rucksäcke, Schläger wie beispielsweise Tennis- oder Hockeyschläger, Sportschuhe und die Innenseite von Helmen. Eine weitere Verwendung von erfindungsgemäßen mehrschichtigen Verbundmaterialien sind elektrische Geräte und ihre Verpackungen, beispielsweise Mobiltelefone und Hüllen für Mobiltelefone, Spielkonsolen, Keyboards (Tastaturen) für Computer. Eine weitere Verwendung für erfindungsgemäße mehrschichtige Verbundmaterialien sind Möbel, beispielsweise Sofas, Liegemöbel wie Liegen, Sessel und Stühle. Eine weitere Verwendung für erfindungsgemäße Verbundmaterialien sind Elemente für den Innenraum von Gebäuden, beispielsweise Vorhänge, Gardinen und Wandverkleidungen.

Ein weiterer Gegenstand der vorliegenden Erfindung ist ein Verfahren zur Herstellung von erfindungsgemäßen mehrschichtigen Verbundmaterialien, im Rahmen der vorliegenden Erfindung auch als erfindungsgemäßes Herstellungsverfahren bezeichnet. In einer Ausführungsform des erfindungsgemäßen Herstellungsverfahrens geht man so vor, dass man Material (B), welches Wasser oder wässrige Flüssigkeiten absorbieren kann, kurz auch absorptionsfähiges Material (B) genannt, mit einem textilen Flächengebilde (A) verbindet, dass man mit Hilfe einer Matrize eine Polyurethanschicht (D) bildet, mindestens einen organischen Klebstoff vollflächig oder partiell auf mit dem absorptionsfähigem Material (B) verbundenen Flächengebilde (A) und/oder auf Polyurethanschicht (D) aufbringt und dann Polyurethanschicht (D) mit dem mit Material (B) kombinierten Flächengebilde (A) punktförmig, streifenartig oder flächig verbindet.

Definition und Herstellung von absorptionsfähigem Material (B) und von Flächengebilde sind vorstehend beschrieben. Es handelt sich bei absorptionsfähigem Material (B) um einen Superabsorber (B). Es handelt sich bei Flächengebilde (A) um ein textiles Flächengebilde (A).

In einer Ausführungsform der vorliegenden Erfindung stellt man erfindungsgemäßes mehrschichtiges Verbundmaterial durch ein Beschichtungsverfahren her, indem man zunächst eine Kombination aus Flächengebilde (A) und absorptionsfähigem Material (B) herstellt, weiterhin einen Polyurethanfilm (D) bereitstellt, mindestens die Kombination aus absorptionsfähigem Material (B) und Flächengebilde (A) oder den Polyurethanfilm (D) oder beides auf je einer Fläche teilweise, beispielsweise musterförmig, mit organischem Klebstoff bestreicht und dann die beiden Flächen miteinander in Kontakt bringt. Danach kann man noch das so erhältliche System aneinanderpressen oder thermisch behandeln oder unter Erwärmen aneinanderpressen.

Der Polyurethanfilm (D) bildet die spätere Polyurethanschicht (D) des erfindungsgemäßen mehrschichtigen Verbundmaterials. Den Polyurethanfilm (D) kann man wie folgt herstellen.

Man bringt eine wässrige Polyurethan-Dispersion auf eine Matrize auf, die vorgewärmt ist, lässt das Wasser verdunsten und überführt danach den sich so bildenden Polyurethanfilm (D) auf die Kombination aus Flächengebilde (A) und absorptionsfähigem Material (B).

Das Aufbringen von wässriger Polyurethan-Dispersion auf die Matrize kann nach an sich bekannten Methoden erfolgen, insbesondere durch Aufsprühen, beispielsweise mit einer Sprühpistole.

Die Matrize kann eine Musterung, auch Strukturierung genannt, aufweisen, die man beispielsweise durch Lasergravur erzeugt oder durch Abformen.

In einer Ausführungsform der vorliegenden Erfindung stellt man eine Matrize bereit, die eine elastomere Schicht oder einen Schichtverbund aufweist, umfassend eine elastomere Schicht auf einem Träger, wobei die elastomere Schicht ein Bindemittel sowie gegebenenfalls weitere Zusatz- und Hilfsstoffe umfasst. Die Bereitstellung einer Matrize kann dann die folgenden Schritte umfassen:
1) Aufbringen eines flüssigen Bindemittels, das gegebenenfalls Zusatz- und/oder Hilfsstoffe enthält, auf eine gemusterte Oberfläche, beispielsweise eine andere Matrize oder ein Originalmuster,
2) Aushärten des Bindemittels, beispielsweise durch thermisches Aushärten, Strahlungshärtung oder durch Alternlassen,
3) Trennen der so erhältlichen Matrize und gegebenenfalls Aufbringen auf einen Träger, beispielsweise eine Metallplatte oder einen Metallzylinder.

In einer Ausführungsform der vorliegenden Erfindung geht man so vor, dass man ein flüssiges Silikon auf ein Muster aufgibt, das Silikon altern und somit aushärten lässt und dann abzieht. Die Silikonfolie wird dann auf einem Aluträger geklebt.

In einer bevorzugten Ausführungsform der vorliegenden Erfindung stellt man eine Matrize bereit, die eine lasergravierbare Schicht oder einen Schichtverbund aufweist, umfassend eine lasergravierbare Schicht auf einem Träger, wobei die lasergravierbare Schicht ein Bindemittel sowie gegebenenfalls weitere Zusatz- und Hilfsstoffe umfasst. Die lasergravierbare Schicht ist vorzugsweise außerdem elastomer.

In einer bevorzugten Ausführungsform umfasst die Bereitstellung einer Matrize die folgenden Schritte:
1) Bereitstellen einer lasergravierbaren Schicht oder eines Schichtverbunds, umfassend eine lasergravierbare Schicht auf einem Träger, wobei die lasergravierbare Schicht ein Bindemittel sowie vorzugsweise Zusatz- und Hilfsstoffe umfasst,
2) thermochemische, photochemische oder aktinische Verstärkung der lasergravierbaren Schicht,
3) Eingravieren einer der Oberflächenstruktur der oberflächenstrukturierten Beschichtung entsprechenden Oberflächenstruktur in die lasergravierbare Schicht mit einem Laser.

Die lasergravierbare Schicht, die vorzugsweise elastomer ist, oder der Schichtverbund können auf einem Träger vorliegen, vorzugsweise liegen sie auf einem Träger vor. Beispiele für geeignete Träger umfassen Gewebe und Folien aus Polyethylenterephthalat (PET), Polyethylennaphthalat (PEN), Polybutylenterephthalat (PBT), Polyethylen, Polypropylen, Polyamid oder Polycarbonat, bevorzugt PET- oder PEN-Folien. Ebenfalls als Träger geeignet sind Papiere und Gewirke, beispielsweise aus Cellulose. Als Träger können auch konische oder zylindrische Röhren aus den besagten Materialien, so genannte Sleeves, eingesetzt werden. Für Sleeves eignen sich auch Glasfasergewebe oder Verbundmaterialien aus Glasfasern und polymeren Werkstoffen. Weiterhin geeignete Trägermaterialien sind metallische Träger wie beispielsweise massive oder gewebeförmige, flächige oder zylindrische Träger aus Aluminium, Stahl, magnetisierbarem Federstahl oder anderen Eisenlegierungen.

In einer Ausführungsform der vorliegenden Erfindung kann der Träger zur besseren Haftung der lasergravierbaren Schicht mit einer Haftschicht beschichtet sein. In einer anderen Ausführungsform der vorliegenden Erfindung ist keine Haftschicht erforderlich.

Die lasergravierbare Schicht umfasst mindestens ein Bindemittel, das ein Präpolymer sein kann, welches im Zuge einer thermochemischen Verstärkung zu einem Polymer reagiert. Geeignete Bindemittel kann man je nach den gewünschten Eigenschaften der lasergravierbaren Schicht bzw. der Matrize, beispielsweise im Hinblick auf Härte, Elastizität oder Flexibilität, auswählen. Geeignete Bindemittel lassen sich im Wesentlichen in 3 Gruppen einteilen, ohne dass die Bindemittel hierauf beschränkt sein sollen.

Die erste Gruppe umfasst solche Bindemittel, die über ethylenisch ungesättigte Gruppen verfügen. Die ethylenisch ungesättigten Gruppen sind photochemisch, thermochemisch, mittels Elektronenstrahlen oder mit einer beliebigen Kombination dieser Prozesse vernetzbar. Zusätzlich kann eine mechanische Verstärkung mittels Füllstoffen vorgenommen werden. Derartige Bindemittel sind beispielsweise solche, die 1,3-Dien-Monomere wie Isopren oder 1,3-Butadien einpolymerisiert enthalten. Die ethylenisch ungesättigte Gruppe kann dabei einmal als Kettenbaustein des Polymeren fungieren (1,4-Einbau), oder sie kann als Seitengruppe (1,2-Einbau) an die Polymerkette gebunden sein. Als Beispiele seien Naturkautschuk, Polybutadien, Polyisopren, Styrol-Butadien-Kautschuk, Nitril-Butadien-Kautschuk, Acrylnitril-Butadien-Styrol (ABS) Copolymer, Butyl-Kautschuk, Styrol-Isopren-Kautschuk, Polychloropren, Polynorbornen-Kautschuk, Ethylen-Propylen-Dien-Kautschuk (EPDM) oder Polyurethan-Elastomere mit ethylenisch ungesättigten Gruppen genannt.

Weitere Beispiele umfassen thermoplastisch elastomere Blockcopolymere aus Alkenylaromaten und 1,3-Dienen. Bei den Blockcopolymeren kann es sich sowohl um lineare Blockcopolymere oder auch um radiale Blockcopolymere handeln. Üblicherweise handelt es sich um Dreiblockcopolymere vom A-B-A-Typ, es kann sich aber auch um Zweiblockpolymere vom A-B-Typ handeln, oder um solche mit mehreren alternierenden elastomeren und thermoplastischen Blöcken, z.B. A-B-A-B-A. Es können auch Gemische zweier oder mehrerer unterschiedlicher Blockcopolymere eingesetzt werden. Handelsübliche Dreiblockcopolymere enthalten häufig gewisse Anteile an Zweiblockcopolymeren. Dien-Einheiten können 1,2- oder 1,4-verknüpft sein. Es können sowohl Blockcopolymere vom Styrol-Butadien wie vom Styrol-Isopren-Typ eingesetzt werden. Sie sind beispielsweise unter dem Namen Kraton® im Handel erhältlich. Weiterhin einsetzbar sind auch thermoplastisch elastomere Blockcopolymere mit Endblöcken aus Styrol und einem statistischen Styrol-Butadien-Mittelblock, die unter dem Namen Styroflex® erhältlich sind.

Weitere Beispiele von Bindemitteln mit ethylenisch ungesättigten Gruppen umfassen modifizierte Bindemittel, bei denen vernetzbare Gruppen durch Pfropfungsreaktionen in das polymere Molekül eingeführt werden.

Die zweite Gruppe umfasst solche Bindemittel, die über funktionelle Gruppen verfügen. Die funktionellen Gruppen sind thermochemisch, mittels Elektronenstrahlen, photochemisch oder mit einer beliebigen Kombination dieser Prozesse vernetzbar. Zusätzlich kann eine mechanische Verstärkung mittels Füllstoffen vorgenommen werden. Beispiele geeigneter funktioneller Gruppen umfassen -Si(HR¹)O-, -Si(R¹R²)O-, -OH, -NH₂, -NHR¹, -COOH, -COOR¹, -COHN₂, -O-C(O)NHR¹, -SO₃H oder -CO-. Beispiele von Bindemitteln umfassen Silikonelastomere, Acrylat-Kautschuke, Ethylen-Acrylat-Kautschuke, Ethylen-Acrylsäure-Kautschuke oder Ethylen-Vinylacetat-Kautschuke sowie deren teilweise hydrolysierte Derivate, thermoplastisch elastomere Polyurethane, sulfonierte Polyethylene oder thermoplastisch elastomere Polyester. Dabei sind R¹ und - so vorhanden - R² verschieden oder vorzugsweise gleich und gewählt aus organischen Gruppen und insbesondere C₁-C₆-Alkyl.

In einer Ausführungsform der vorliegenden Erfindung kann man Bindemittel einsetzen, die sowohl über ethylenisch ungesättigte Gruppen als auch über funktionelle Gruppen verfügen. Beispiele umfassen additionsvernetzende Silikonelastomere mit funktionellen und ethylenisch ungesättigten Gruppen, Copolymere von Butadien mit (Meth)acrylaten, (Meth)acrylsäure oder Acrylnitril, sowie weiterhin Copolymere bzw. Blockcopolymere von Butadien oder Isopren mit funktionelle Gruppen aufweisenden Styrolderivaten, beispielsweise Blockcopolymere aus Butadien und 4-Hydroxystyrol.

Die dritte Gruppe von Bindemitteln umfasst solche, die weder über ethylenisch ungesättigte Gruppen noch über funktionelle Gruppen verfügen. Zu nennen sind hier beispielsweise Polyolefine oder Ethylen/Propylen-Elastomere oder durch Hydrierung von Dien-Einheiten erhaltene Produkte, wie beispielsweise SEBS-Kautschuke. Polymerschichten, die Bindemittel ohne ethylenisch ungesättigte oder funktionelle Gruppen enthalten, müssen in der Regel mechanisch, mit Hilfe energiereicher Strahlung oder einer Kombination daraus verstärkt werden, um eine optimal scharfkantige Strukturierbarkeit mittels Laser zu ermöglichen.

Man kann auch Gemische zweier oder mehrerer Bindemittel einsetzen, wobei es sich dabei sowohl um Bindemittel aus jeweils nur einer der geschilderten Gruppen handeln kann oder um Gemische von Bindemitteln aus zwei oder allen drei Gruppen. Die Kombinationsmöglichkeiten sind nur insofern beschränkt, als die Eignung der Polymerschicht für den Laserstrukturierungsprozess und den Abformvorgang nicht negativ beeinflusst werden darf. Vorteilhaft kann beispielsweise ein Gemisch von mindestens einem elastomeren Bindemittel, welches keine funktionellen Gruppen aufweist, mit mindestens einem weiteren Bindemittel, welches funktionelle Gruppen oder ethylenisch ungesättigte Gruppen aufweist, eingesetzt werden.

In einer Ausführungsform der vorliegenden Erfindung beträgt der Anteil des oder der Bindemittel in der elastomeren Schicht bzw. der betreffenden lasergravierbaren Schicht 30 Gew.-% bis 99 Gew.-% bezüglich der Summe aller Bestandteile der betreffenden elastomeren Schicht bzw. der betreffenden lasergravierbaren Schicht, bevorzugt 40 bis 95 Gew.-%, und ganz besonders bevorzugt 50 bis 90 Gew.-%.

In einer Ausführungsform der vorliegenden Erfindung bildet man Polyurethanschicht (D) mit Hilfe einer Silikonmatrize. Unter Silikonmatrizen werden im Rahmen der vorliegenden solche Matrizen verstanden, zu deren Herstellung mindestens ein Bindemittel eingesetzt wird, das mindestens eine, bevorzugt mindestens drei O-Si(R¹R²)-O-Gruppen pro Molekül aufweist, wobei die Variablen wie vorstehend definiert sind.

Optional kann die elastomere Schicht bzw. lasergravierbare Schicht reaktive niedermolekulare oder oligomere Verbindungen umfassen. Oligomere Verbindungen weisen im Allgemeinen ein Molekulargewicht von nicht mehr als 20.000 g/mol auf. Reaktive niedermolekulare und oligomere Verbindungen sollen im Folgenden der Einfachheit halber als Monomere bezeichnet werden.

Monomere können einerseits zugesetzt werden, um die Geschwindigkeit der fotochemischen oder thermochemischen Vernetzung oder der Vernetzung mittels energiereicher Strahlung zu erhöhen, sofern dies gewünscht wird. Bei Verwendung von Bindemitteln aus der ersten und zweiten Gruppe ist der Zusatz von Monomeren zur Beschleunigung im Allgemeinen nicht zwingend notwendig. Bei Bindemitteln aus der dritten Gruppe ist der Zusatz von Monomeren im Regelfalle empfehlenswert, ohne dass dies zwingend in jedem Falle notwendig wäre.

Unabhängig von der Frage der Vernetzungsgeschwindigkeit können Monomere auch zur Steuerung der Vernetzungsdichte eingesetzt werden. Je nach Art und Menge der zugesetzten niedermolekularen Verbindungen werden weitere oder engere Netzwerke erhalten. Als Monomere können einerseits bekannte ethylenisch ungesättigte Monomere eingesetzt werden. Die Monomeren sollen mit den Bindemitteln im Wesentlichen verträglich sein und mindestens eine fotochemisch oder thermochemisch reaktive Gruppe aufweisen. Sie sollten nicht leichtflüchtig sein. Bevorzugt beträgt der Siedepunkt von geeigneten Monomeren mindestens 150°C. Besonders geeignet sind Amide der Acrylsäure oder Methacrylsäure mit mono- oder polyfunktionellen Alkoholen, Aminen, Aminoalkoholen oder Hydroxyethern und -estern, Styrol oder substituierte Styrole, Ester der Fumar- oder Maleinsäure oder Allylverbindungen. Beispiele umfassen n-Butylacrylat, 2-Ethylhexylacrylat, Laurylacrylat, 1,4-Butandioldi(meth)acrylat, 1,6-Hexandioldiacrylat, 1,6-Hexandioldimethacrylat, 1,9-Nonandioldiacrylat, Trimethylolpropantrimethacrylat, Trimethylolpropantriacrylat, Dipropylenglykoldiacrylat, Tripropylenglykoldiacrylat, Dioctylfumarat, N-Dodecylmaleimid und Triallylisocyanurat.

Insbesondere für die thermochemische Verstärkung geeignete Monomere umfassen reaktive niedermolekulare Silikone wie beispielsweise zyklische Siloxane, Si-H-funktionelle Siloxane, Siloxane mit Alkoxy- oder Estergruppen, schwefelhaltige Siloxane und Silane, Dialkohole wie beispielsweise 1,4-Butandiol, 1,6-Hexandiol, 1,8-Octandiol, 1,9-Nonandiol, Diamine wie beispielsweise 1,6-Hexandiamin, 1,8-Octandiamin, Aminoalkohole wie beispielsweise Ethanolamin, Diethanolamin, Butylethanolamin, Dicarbonsäuren wie beispielsweise 1,6-Hexandicarbonsäure, Terephthalsäure, Maleinsäure oder Fumarsäure.

Es können auch Monomere eingesetzt werden, die sowohl ethylenisch ungesättigte Gruppen wie funktionelle Gruppen aufweisen. Als Beispiele seinen ω-Hydroxyalkyl(meth)acrylate genannt, wie beispielsweise Ethylenglykolmono(meth)acrylat, 1,4-Butandiolmono(meth)acrylat oder 1,6-Hexandiolmono(meth)acrylat.

Selbstverständlich können auch Gemische verschiedener Monomerer eingesetzt werden, vorausgesetzt die Eigenschaften der elastomeren Schicht werden durch die Mischung nicht negativ beeinflusst. Im Regelfalle beträgt die Menge zugesetzter Monomere 0 bis 40 Gew.-% bezüglich der Menge aller Bestandteile der elastomeren Schicht bzw. der betreffenden lasergravierbaren Schicht, bevorzugt 1 bis 20 Gew.-%.

In einer Ausführungsform kann man ein oder mehrere Monomere mit einem oder mehreren Katalysatoren einsetzen. So ist es möglich, Silikonmatrizen durch Zugabe von einer oder mehrerer Säuren oder durch Organozinnverbindungen den Schritt 2) der Bereitstellung der Matrize zu beschleunigen. Geeignete Organozinnverbindungen können sein: Di-n-butylzinndilaureat, Di-n-butylzinndiactanoat, Di-n-butylzinndi-2-ethylhexanoat, Di-n-octylzinndi-2-ethylhexanoat und Di-n-butylbis(1-oxoneodecyloxy)stannan.

Die elastomere Schicht bzw. die lasergravierbare Schicht kann weiterhin Zusatz- und Hilfsstoffe wie beispielsweise IR-Absorber, Farbstoffe, Dispergierhilfsmittel, Antistatika, Weichmacher oder abrasive Partikel umfassen. Die Menge derartiger Zusatz- und Hilfsstoffe sollte im Regelfalle 30 Gew.-% bezüglich der Menge aller Komponenten der elastomeren Schicht bzw. der betreffenden lasergravierbaren Schicht nicht überschreiten.

Die elastomere Schicht bzw. die lasergravierbare Schicht kann aus mehreren Einzelschichten aufgebaut werden. Diese Einzelschichten können von gleicher, in etwa gleicher oder von unterschiedlicher stofflicher Zusammensetzung sein. Die Dicke der lasergravierbaren Schicht bzw. aller Einzelschichten zusammen beträgt im Regelfalle zwischen 0,1 und 10 mm, bevorzugt 0,5 bis 3 mm. Die Dicke kann man abhängig von anwendungstechnischen und maschinentechnischen Prozessparametern des Lasergravurvorgangs und des Abformvorgangs geeignet auswählen.

Die elastomere Schicht bzw. die lasergravierbare Schicht kann optional weiterhin eine Oberschicht mit einer Dicke von nicht mehr als 300 µm aufweisen. Die Zusammensetzung einer solchen Oberschicht kann man im Hinblick auf optimale Gravierbarkeit und mechanische Stabilität auswählen, während die Zusammensetzung der darunter liegenden Schicht im Hinblick auf optimale Härte oder Elastizität ausgewählt wird.

In einer Ausführungsform der vorliegenden Erfindung ist die Oberschicht selbst lasergravierbar oder im Zuge der Lasergravur zusammen mit der darunter liegenden Schicht entfernbar. Die Oberschicht umfasst mindestens ein Bindemittel. Sie kann weiterhin einen Absorber für Laserstrahlung oder auch Monomere oder Hilfsmittel umfassen.

In einer Ausführungsform der vorliegenden Erfindung handelt es sich bei der Silikonmatrize um eine mit Hilfe von Lasergravur strukturierte Silikonmatrize.

Von ganz besonderem Vorteil werden für das erfindungsgemäße Verfahren thermoplastisch elastomere Bindemittel oder Silikonelastomere eingesetzt. Bei Verwendung thermoplastisch elastomerer Bindemittel erfolgt die Herstellung bevorzugt durch Extrudieren zwischen eine Trägerfolie und eine Deckfolie oder ein Deckelement gefolgt von Kalandrieren, wie beispielsweise für Flexodruckelemente in EP-A 0 084 851 offenbart. Auf diese Art und Weise lassen sich auch dickere Schichten in einem einzigen Arbeitsgang herstellen. Mehrschichtige Elemente können mittels Coextrusion hergestellt werden.

Wünscht man die Matrize mit Hilfe von Lasergravur zu strukturieren, so ist es bevorzugt, die lasergravierbare Schicht vor der Lasergravur durch Erwärmen (thermochemisch), durch Bestrahlen mit UV-Licht (photochemisch) oder durch Bestrahlen mit energiereicher Strahlung (aktinisch) oder einer beliebigen Kombination davon zu verstärken.

Anschließend wird die lasergravierbare Schicht oder der Schichtverbund auf einen zylindrischen (temporären) Träger, beispielsweise aus Kunststoff, glasfaserverstärktem Kunststoff, Metall oder Schaum, beispielsweise mittels Klebeband, Unterdruck, Klemmvorrichtungen oder Magnetkraft, aufgebracht und wie oben beschrieben graviert. Alternativ kann auch die plane Schicht bzw. der Schichtverbund wie oben beschrieben graviert werden. Optional wird während des Lasergravurvorgangs die lasergravierbare Schicht mit einem Rundwascher oder einem Durchlaufwascher mit einem Reinigungsmittel zur Entfernung von Gravurrückständen gewaschen.

Auf die beschriebene Weise kann die Matrize als Negativmatrize oder als Positivmatrize hergestellt werden.

In einer ersten Variante weist die Matrize eine Negativ-Struktur auf, so dass die mit Flächengebilde (A) und absorptionsfähigem Material (B) verbindbare Beschichtung direkt durch Auftragen eines flüssigen Kunststoffmaterials auf die Oberfläche der Matrize und anschließender Verfestigung des Polyurethans erhalten werden kann.

In einer zweiten Variante weist die Matrize eine Positiv-Struktur auf, so dass zunächst eine Negativ-Matrize durch Abformung von der laserstrukturierten Positivmatrize hergestellt wird. Von dieser Negativ-Matrize kann die mit einem flächigen Träger verbindbare Beschichtung anschließend durch Auftragen eines flüssigen Kunststoffmaterials auf die Oberfläche der Negativmatrize und anschließender Verfestigung des Kunststoffmaterials erhalten werden.

Vorzugsweise werden in die Matrize Strukturelemente mit Abmessungen im Bereich von 10 bis 500 µm eingraviert. Die Strukturelemente können als Erhebungen oder Vertiefungen ausgebildet sein. Vorzugsweise haben die Strukturelemente eine einfache geometrische Form und sind beispielsweise Kreise, Ellipsen, Quadraten, Rauten, Dreiecken und Sterne. Die Strukturelemente können ein regelmäßiges oder unregelmäßiges Raster bilden. Beispiele sind ein klassisches Punktraster oder ein stochastisches Raster, beispielsweise ein frequenzmoduliertes Raster.

In einer Ausführungsform der vorliegenden Erfindung arbeitet man zur Strukturierung der Matrize mit Hilfe eines Lasers Näpfchen in die Matrize ein, die eine mittlere Tiefe im Bereich von 50 bis 250 µm aufweisen und einen Mittenabstand im Bereich von 50 bis 250 µm.

Beispielsweise kann man die Matrize so gravieren, dass sie "Näpfchen" (Vertiefungen) aufweist, welche einen Durchmesser im Bereich von 10 bis 500 µm an der Oberfläche der Matrize aufweisen. Vorzugsweise beträgt der Durchmesser an der Oberfläche der Matrize 20 bis 250 µm und besonders bevorzugt 30 bis 150 µm. Der Abstand der Näpfchen kann beispielsweise 10 bis 500 µm, vorzugsweise 20 bis 200 µm, besonders bevorzugt bis 80 µm betragen.

In einer Ausführungsform der vorliegenden Erfindung weist die Matrize vorzugsweise neben einer Oberflächen-Grobstruktur noch eine Oberflächen-Feinstruktur auf. Sowohl Grob- als auch Feinstruktur können durch Lasergravur erzeugt werden. Die Feinstruktur kann beispielsweise eine Mikrorauhigkeit mit einer Rauhigkeitsamplitude im Bereich von 1 bis 30 µm und einer Rauhigkeitsfrequenz von 0,5 bis 30 µm sein. Bevorzugt liegen die Dimensionen der Mikrorauhigkeit im Bereich von 1 bis 20 µm, besonders bevorzugt 2 bis 15 µm und besonders bevorzugt 3 bis 10 µm.

Zur Lasergravur eigenen sich insbesondere IR-Laser. Es können aber auch Laser mit kürzeren Wellenlängen eingesetzt werden, vorausgesetzt der Laser weist eine ausreichende Intensität auf. Beispielsweise kann ein frequenzverdoppelter (532 nm) oder frequenzverdreifachter (355 nm) Nd-YAG-Laser eingesetzt werden, oder auch ein Excimer-Laser (z.B. 248 nm). Zur Lasergravur kann beispielsweise ein CO₂-Laser mit einer Wellenlänge von 10640 nm eingesetzt werden. Besonders bevorzugt werden Laser mit einer Wellenlänge von 600 bis 2000 nm eingesetzt. Beispielsweise können Nd-YAG-Laser (1064 nm), IR-Diodenlaser oder Festkörperlaser eingesetzt werden. Besonders bevorzugt sind Nd/YAG-Laser. Die einzugravierende Bildinformation wird direkt aus dem Lay-Out-Computersystem zur Laserapparatur übertragen. Die Laser können entweder kontinuierlich oder gepulst betrieben werden.

Im Regelfall kann die erhaltene Matrize nach der Herstellung direkt eingesetzt werden. Falls gewünscht, kann die erhaltene Matrize noch nachgereinigt werden. Durch einen solchen Reinigungsschritt werden losgelöste, aber eventuell noch nicht vollständig von der Oberfläche entfernte Schichtbestandteile entfernt. Im Regelfalle ist einfaches Behandeln mit Wasser, Wasser/Tensid, Alkoholen oder inerten organischen Reinigungsmitteln ausreichend, die vorzugsweise quellungsarm sind.

In einem weiteren Schritt bringt man eine wässrige Formulierung von Polyurethan auf die Matrize auf. Das Aufbringen kann vorzugsweise durch Aufsprühen erfolgen. Die Matrize sollte erwärmt sein, wenn man die Formulierung von Polyurethan aufbringt, beispielsweise auf Temperaturen von mindestens 80°C, bevorzugt mindestens 90°C. Das Wasser aus der wässrigen Formulierung von Polyurethan verdampft und bildet die Kapillaren in der sich verfestigenden Polyurethanschicht.

Unter wässrig wird im Zusammenhang mit der Polyurethandispersion verstanden, dass sie Wasser enthält, aber weniger als 5 Gew.-%, bezogen auf die Dispersion, bevorzugt weniger als 1 Gew.-% organisches Lösungsmittel. Besonders bevorzugt lässt sich kein flüchtiges organisches Lösungsmittel nachweisen. Unter flüchtigen organischen Lösungsmitteln werden im Rahmen der vorliegenden Erfindung solche organischen Lösungsmittel verstanden, die bei Normaldruck einen Siedepunkt von bis zu 200°C aufweisen.

Die wässrige Polyurethandispersion kann einen Feststoffgehalt im Bereich von 5 bis 60 Gew.-% auf, bevorzugt 10 bis 50 Gew.-% und besonders bevorzugt 25 bis 45 Gew.-% aufweisen.

Polyurethane (PU) sind allgemein bekannt, kommerziell erhältlich und bestehen im allgemeinen aus einer Weichphase aus höhermolekularen Polyhydroxylverbindungen, z.B. aus Polycarbonat, Polyester- oder Polyethersegmenten, und einer Urethan-Hartphase, gebildet aus niedermolekularen Kettenverlängerungsmitteln und Di- oder Polyisocyanaten.

Verfahren zur Herstellung von Polyurethanen (PU) sind allgemein bekannt. Im allgemeinen werden Polyurethane (PU) durch Umsetzung von
Isocyanaten, bevorzugt Diisocyanaten mit
gegenüber Isocyanaten reaktiven Verbindungen, üblicherweise mit einem Molekulargewicht (M_{w}) von 500 bis 10.000 g/mol, bevorzugt 500 bis 5.000 g/mol, besonders bevorzugt 800 bis 3.000 g/mol, und
Kettenverlängerungsmitteln mit einem Molekulargewicht von 50 bis 499 g/mol gegebenenfalls in Gegenwart von
Katalysatoren
und/oder üblichen Zusatzstoffen hergestellt.

Im Folgenden sollen beispielhaft die Ausgangskomponenten und Verfahren zur Herstellung der bevorzugten Polyurethane (PU) dargelegt werden. Die bei der Herstellung der Polyurethane (PU) üblicherweise verwendeten Komponenten (a), (b), (c) sowie gegebenenfalls (d) und/oder (e) sollen im Folgenden beispielhaft beschrieben werden:
Als Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanato-methyl-cyclohexan (Isophorondiisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat. Bevorzugt wird 4,4'-MDI verwendet. Bevorzugt sind zudem aliphatische Diisocyanate, insbesondere Hexamethylendiisocyanat (HDI), und besonders bevorzugt sind aromatische Diisocyanate wie 2,2'-, 2,4'- und/oder 4,4'-Diphenylmethandiisocyanat (MDI) und Mischungen der vorstehend genannten Isomere.

Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (M_{w}) im Bereich von 500 und 8.000 g/mol, bevorzugt 600 bis 6.000 g/mol, insbesondere 800 bis 3.000 g/mol, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, 1,2-Propylenoxid und/oder 1,2-Butylenoxid, bevorzugt Polyetherole basierend auf Polyoxytetramethylen (Poly-THF), 1,2-Propylenoxid und Ethylenoxid. Polyetherole weisen den Vorteil auf, dass sie eine höhere Hydrolysestabilität als Polyesterole besitzen, und sind bevorzugt als Komponente (b), insbesondere zur Herstellung von weichen Polyurethanen Polyurethan (PU1).

Als Polycarbonatdiole sind insbesondere aliphatische Polycarbonatdiole zu nennen, beispielsweise 1,4-Butandiol-Polycarbonat und 1,6-Hexandiol-Polycarbonat.

Als Polyesterdiole sind solche zu nennen, die sich durch Polykondensation von mindestens einem primären Diol, vorzugsweise mindestens einen primären aliphatischen Diol, beispielsweise Ethylenglykol, 1,4-Butandiol, 1,6-Hexandiol, Neopentylglykol oder besonders bevorzugt 1,4-Dihydroxymethylcyclohexan (als Isomerengemisch) oder Mischungen von mindestens zwei der vorstehend genannten Diole einerseits und mindestens einer, bevorzugt mindestens zwei Dicarbonsäuren oder ihren Anhydriden andererseits herstellen lassen. Bevorzugte Dicarbonsäuren sind aliphatische Dicarbonsäuren wie Adipinsäure, Glutarsäure, Bernsteinsäure und aromatische Dicarbonsäuren wie beispielsweise Phthalsäure und insbesondere Isophthalsäure.

Polyetherole werden bevorzugt durch Anlagerung von Alkylenoxiden, insbesondere Ethylenoxid, Propylenoxid und Mischungen daraus, an Diole wie beispielsweise Ethylenglykol, 1,2-Propylenglykol, 1,2-Butylenglykol, 1,4-Butandiol, 1,3-Propandiol, oder an Triole wie beispielsweise Glycerin, in Gegenwart von hochaktiven Katalysatoren hergestellt. Derartige hochaktive Katalysatoren sind beispielsweise Cäsiumhydroxid und Dimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetherol belassen werden, vorzugsweise wird er entfernt, beispielsweise durch Sedimentation oder Filtration.

Statt eines Polyols können auch Mischungen verschiedener Polyole eingesetzt werden.

Zur Verbesserung der Dispergierbarkeit kann man als gegenüber Isocyanaten reaktive Verbindungen (b) anteilig auch ein oder mehr Diole oder Diamine mit einer Carbonsäuregruppe oder Sulfonsäuregruppe (b') einsetzen, insbesondere Alkalimetall- oder Ammoniumsalze von 1,1-Dimethylolbutansäure, 1,1-Dimethylolpropionsäure oder

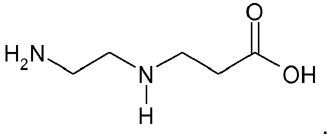

Als Kettenverlängerungsmittel (c) werden an sich bekannte aliphatische, araliphatische, aromatische und/oder cycloaliphatische Verbindungen mit einem Molekulargewicht von 50 bis 499 g/mol und mindestens zwei funktionellen Gruppen, bevorzugt Verbindungen mit genau zwei funktionellen Gruppen pro Molekül, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen pro Molekül, bevorzugt entsprechende Oligo- und/oder Polypropylenglykole, wobei auch Mischungen an Kettenverlängerungsmitteln (c) eingesetzt werden können.

Besonders bevorzugt handelt es sich bei den Komponenten (a) bis (c) um difunktionelle Verbindungen, d.h. Diisocyanate (a), difunktionelle Polyole, bevorzugt Polyetherole (b) und difunktionelle Kettenverlängerungsmittel, bevorzugt Diole.

Geeignete Katalysatoren (d), welche insbesondere die Reaktion zwischen den NCO-Gruppen der Diisocyanate (a) und den Hydroxylgruppen der Aufbaukomponenten (b) und (c) beschleunigen, sind an sich bekannte tertiäre Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan ("DABCO") und ähnliche tertiäre Amine, sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Komponente (b) eingesetzt.

Neben Katalysator (d) können den Komponenten (a) bis (c) auch Hilfsmittel und/oder Zusatzstoffe (e) hinzugefügt werden. Genannt seien beispielsweise Treibmittel, Antiblockmittel, oberflächenaktive Substanzen, Füllstoffe, beispielsweise Füllstoffe auf Basis von Nanopartikeln, insbesondere Füllstoffe auf Basis von CaCO₃, weiterhin Keimbildungsmittel, Gleithilfemittel, Farbstoffe und Pigmente, Antioxidantien, z.B. gegen Hydrolyse, Licht, Hitze oder Verfärbung, anorganische und/oder organische Füllstoffe, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Bevorzugt enthält das weiche Polyurethan Triazol und/oder Triazolderivat und Antioxidantien in einer Menge von 0,1 bis 5 Gew.-% bezogen auf das Gesamtgewicht des betreffenden weichen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für sterisch gehinderte Phenole finden sich in Plastics Additive Handbook, 5th edition, H. Zweifel, ed, Hanser Publishers, München, 2001 ([1]), S. 98-107 und S. 116 - S. 121. Beispiele für aromatische Amine finden sich in [1] S. 107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im Antioxidantiengemisch eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse (M_{w}) bis maximal 10.000 g/mol, bevorzugt bis maximal 3.000 g/mol auf. Ferner besitzen sie bevorzugt einen Schmelzpunkt von maximal 180°C. Weiterhin werden bevorzugt Antioxidantien verwendet, die amorph oder flüssig sind. Ebenfalls können als Komponente (e) auch Gemische von zwei oder mehr Antioxidantien verwendet werden.

Neben den genannten Komponenten (a), (b) und (c) und gegebenenfalls (d) und (e) können auch Kettenregler (Kettenabbruchsmittel), üblicherweise mit einem Molekulargewicht von 31 bis 3000 g/mol, eingesetzt werden. Solche Kettenregler sind Verbindungen, die lediglich eine gegenüber Isocyanaten reaktive funktionelle Gruppe aufweisen, wie z.B. monofunktionelle Alkohole, monofunktionelle Amine und/oder monofunktionelle Polyole. Durch solche Kettenregler kann ein Fließverhalten, insbesondere bei weichen Polyurethanen, gezielt eingestellt werden. Kettenregler können im allgemeinen in einer Menge von 0 bis 5, bevorzugt 0,1 bis 1 Gew.-Teile, bezogen auf 100 Gew.-Teile der Komponente (b) eingesetzt werden und fallen definitionsgemäß unter die Komponente (c).

Neben den genannten Komponenten (a), (b) und (c) und gegebenenfalls (d) und (e) können auch Vernetzungsmittel mit zwei oder mehr gegenüber Isocyanat reaktiven Gruppen gegen Schluss der Aufbaureaktion eingesetzt werden, beispielsweise Hydrazinhydrat.

Zur Einstellung der Härte von Polyurethan (PU) können die Komponenten (b) und (c) in relativ breiten molaren Verhältnissen gewählt werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der weichen Polyurethane mit zunehmendem Gehalt an (c) ansteigt. Die Umsetzung zur Herstellung von Polyurethan (PU) kann bei einer Kennzahl von 0,8 bis 1,4 : 1, bevorzugt bei einer Kennzahl von 0,9 bis 1,2 : 1, besonders bevorzugt bei einer Kennzahl von 1,05 bis 1,2 : 1 erfolgen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und gegebenenfalls (c) und gegebenenfalls monofunktionellen gegenüber Isocyanaten reaktiven Komponenten als Kettenabbruchsmitteln wie z.B. Monoalkoholen.

Die Herstellung von Polyurethan (PU) kann nach an sich bekannten Verfahren kontinuierlich, beispielsweise nach One-shot oder dem Prepolymerverfahren, oder diskontinuierlich nach dem an sich bekannten Prepolymerprozess erfolgen. Bei diesen Verfahren können die zur Reaktion kommenden Komponenten (a), (b), (c) und gegebenenfalls (d) und/oder (e) nacheinander oder gleichzeitig miteinander vermischt werden, wobei die Reaktion unmittelbar einsetzt.

Polyurethan (PU) kann man nach an sich bekannten Verfahren in Wasser dispergieren, beispielsweise indem man Polyurethan (PU) in Aceton löst oder als Lösung in Aceton herstellt, mit Wasser versetzt und danach das Aceton entfernt, beispielsweise durch Abdestillieren. In einer Variante stellt man Polyurethan (PU) als Lösung in N-Methylpyrrolidon oder N-Ethylpyrrolidon her, versetzt mit Wasser und entfernt das N-Methylpyrrolidon bzw. N-Ethylpyrrolidon.

In einer Ausführungsform der vorliegenden Erfindung enthalten erfindungsgemäße wässrige Dispersionen zwei verschiedene Polyurethane Polyurethan (PU1) und Polyurethan (PU2) auf, von denen Polyurethan (PU1) ein so genanntes weiches Polyurethan ist, das wie oben als Polyurethan (PU) beschrieben aufgebaut ist, und mindestens ein hartes Polyurethan (PU2).

Hartes Polyurethan (PU2) kann man im Grundsatz analog zu weichem Polyurethan (PU1) herstellen, jedoch wählt man andere gegenüber Isocyanaten reaktiven Verbindungen (b) oder andere Mischungen von gegenüber Isocyanaten reaktiven Verbindungen (b), im Rahmen der vorliegenden Erfindung auch als gegenüber Isocyanaten reaktiven Verbindungen (b2) oder kurz Verbindung (b2) bezeichnet.

Beispiele für Verbindungen (b2) sind insbesondere 1,4-Butandiol, 1,6-Hexandiol und Neopentylglykol, entweder in Mischung miteinander oder in Mischung mit Polyethylenglykol.

In einer Variante der vorliegenden Erfindung wählt man als Diisocyanat (a) und Polyurethan (PU2) jeweils Mischungen von Diisocyanaten, beispielsweise Mischungen von HDI und IPDI, wobei man zur Herstellung von hartem Polyurethan (PU2) größere Anteile an IPDI wählt als zur Herstellung von weichem Polyurethan (PU1).

In einer Ausführungsform der vorliegenden Erfindung weist Polyurethan (PU2) einen Shore-Härte A im Bereich von über 60 bis maximal 100 auf, wobei die Shore-Härte A nach DIN 53505 nach 3 s bestimmt wurde.

In einer Ausführungsform der vorliegenden Erfindung weist Polyurethan (PU) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist weiches Polyurethan (PU1) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist Polyurethan (PU2) einen mittleren Partikeldurchmesser im Bereich im Bereich von 100 bis 300 nm, bevorzugt 120 bis 150 nm auf, bestimmt durch Laserlichtstreuung.

Die wässrige Polyurethandispersion kann weiterhin mindestens einen Härter, der auch als Vernetzer bezeichnet werden kann, aufweisen. Als Härter sind Verbindungen geeignet, die mehrere Polyurethanmoleküle miteinander vernetzen können, beispielsweise bei thermischer Aktivierung. Besonders geeignet sind Vernetzer auf Basis von trimeren Diisocyanaten, insbesondere auf Basis von aliphatischen Diisocyanaten wie Hexamethylendiisocyanat. Ganz besonders bevorzugt sind Vernetzer der Formel Ia oder Ib, im Rahmen der vorliegenden Erfindung auch kurz Verbindung (V) genannt, 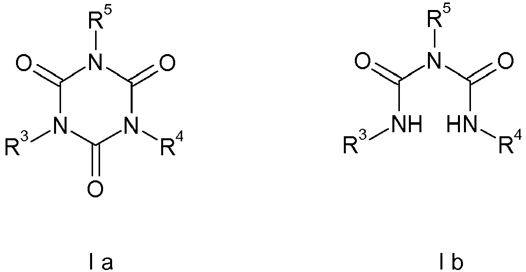
wobei R³, R⁴ und R⁵ verschieden oder vorzugsweise gleich sein können und gewählt werden aus A¹-NCO und A¹-NH-CO-X, wobei
A¹ ein Spacer mit 2 bis 20 C-Atomen ist, gewählt aus Arylen, unsubstituiert oder substituiert mit einer bis vier C₁-C₄-Alkylgruppen, Alkylen und Cycloalkylen, beispielsweise 1,4-Cyclohexylen. Bevorzugte Spacer A¹ sind Phenylen, insbesondere para-Phenylen, weiterhin Toluylen, insbesondere para-Toluylen, und C₂-C₁₂-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-.
X gewählt wird O(AO)ₓR⁶, wobei
AO ist C₂-C₄-Alkylenoxid, beispielsweise Butylenoxid, insbesondere Ethylenoxid (CH₂CH₂O) oder Propylenoxid (CH(CH₃)CH₂O) bzw. (CH₂CH(CH₃)O),
x ist eine ganze Zahl im Bereich von 1 bis 50, bevorzugt 5 bis 25, und
R⁶ ist gewählt aus Wasserstoff und C₁-C₃₀-Alkyl, insbesondere C₁-C₁₀-Alkyl wie Methyl, Ethyl, n-Propyl, iso-Propyl, n-Butyl, iso-Butyl, sec.-Butyl, tert.-Butyl, n-Pentyl, isoPentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl.

Besonders bevorzugte Verbindungen (V) sind solche, bei denen R³, R⁴ und R⁵ jeweils gleich (CH₂)₄-NCO, (CH₂)₆-NCO oder (CH₂)₁₂-NCO sind.

Wässrige Polyurethandispersionen können weitere Bestandteile enthalten, beispielsweise
(f) eine Silikonverbindung mit reaktiven Gruppen,
im Rahmen der vorliegenden Erfindung auch Silikonverbindung (f) genannt.

Beispiele für reaktive Gruppen im Zusammenhang mit Silikonverbindungen (f) sind beispielsweise Carbonsäuregruppen, Carbonsäurederivate wie beispielsweise Carbonsäuremethylester oder Carbonsäureanhydride, insbesondere Bernsteinsäureanhydridgruppen, und besonders bevorzugt Carbonsäuregruppen.

Beispiele für reaktive Gruppen sind weiterhin primäre und sekundäre Aminogruppen, beispielsweise NH(iso-C₃H₇)-Gruppen, NH(n-C₃H₇)-Gruppen, NH(cyclo-C₆H₁₁)-Gruppen und NH(n-C₄H₉)-Gruppen, insbesondere NH(C₂H₅)-Gruppen und NH(CH₃)-Gruppen, und ganz besonders bevorzugt NH₂-Gruppen.

Weiterhin sind Aminoalkylaminogruppen bevorzugt wie beispielsweise -NH-CH₂-CH₂-NH₂-Gruppen, -NH-CH₂-CH₂-CH₂-NH₂-Gruppen, -NH-CH₂-CH₂-NH(C2H₅)-Gruppen, -NH-CH₂-CH₂-CH₂-NH(C2H₅)-Gruppen, -NH-CH₂-CH₂-NH(CH₃)-Gruppen, -NH-CH₂-CH₂-CH₂-NH(CH₃)-Gruppen.

Die reaktive Gruppe bzw. die reaktiven Gruppen sind an Silikonverbindung (f) entweder direkt oder vorzugsweise über einen Spacer A² gebunden. A² wird gewählt aus Arylen, unsubstituiert oder substituiert mit einer bis vier C₁-C₄-Alkylgruppen, Alkylen und Cycloalkylen wie beispielsweise 1,4-Cyclohexylen. Bevorzugte Spacer A² sind Phenylen, insbesondere para-Phenylen, weiterhin Toluylen, insbesondere para-Toluylen, und C₂-C₁₈-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-, -(CH₂)₁₄-, -(CH₂)₁₆- und -(CH₂)₁₈-.

Zusätzlich zu den reaktiven Gruppen enthält Silikonverbindung (f) nicht-reaktive Gruppen, insbesondere Di-C₁-C₁₀-alkyl-SiO₂-Gruppen oder Phenyl-C₁-C₁₀-Alkyl-SiO₂-Gruppen, insbesondere Dimethyl-SiO₂-Gruppen, und gegebenenfalls eine oder mehrere Si(CH₃)₂-OH-Gruppen oder Si(CH₃)₃-Gruppen.

In einer Ausführungsform der vorliegenden Erfindung weist Silikonverbindung (f) im Mittel ein bis vier reaktive Gruppen pro Molekül auf.

In einer speziellen Ausführungsform der vorliegenden Erfindung weist Silikonverbindung (f) im Mittel ein bis vier COOH-Gruppen pro Molekül auf.

In einer anderen speziellen Ausführungsform der vorliegenden Erfindung weist Silikonverbindung (f) im Mittel ein bis vier Aminogruppen oder Aminoalkylaminogruppen pro Molekül auf.

Silikonverbindung (f) weist kettenförmig oder verzweigt angeordnete Si-O-Si-Einheiten auf.

In einer Ausführungsform der vorliegenden Erfindung weist Silikonverbindung (f) ein Molekulargewicht Mₙ im Bereich von 500 bis 10.000 g/mol auf, bevorzugt bis 5.000 g/mol.

Wenn Silikonverbindung (f) mehrere reaktive Gruppen pro Molekül aufweist, so können diese reaktiven Gruppen - direkt oder über Spacer A² - über mehrere Si-Atome oder paarweise über dasselbe Si-Atom an der Si-O-Si-Kette gebunden sein.

Die reaktiven Gruppen bzw. die reaktive Gruppe kann an einem oder mehreren der terminalen Si-Atome von Silikonverbindung (f) - direkt oder über Spacer A² - gebunden sein. In einer anderen Ausführungsform der vorliegenden Erfindung ist die reaktive Gruppe bzw. sind die reaktiven Gruppen an einem oder mehreren der nicht terminalen Si-Atome von Silikonverbindung (f) - direkt oder über Spacer A² - gebunden.

In einer Ausführungsform der vorliegenden Erfindung enthält wässrige Polyurethandispersion weiterhin
ein Polydi-C₁-C₄-Alkylsiloxan (g), das weder Aminogruppen noch COOH-Gruppen aufweist, vorzugsweise ein Polydimethylsiloxan, im Rahmen der vorliegenden Erfindung auch kurz Polydialkylsiloxan (g) bzw. Polydimethylsiloxan (g) genannt.

Dabei kann C₁-C₄-Alkyl in Polydialkylsiloxan (g) verschieden oder vorzugsweise gleich sein und gewählt aus Methyl, Ethyl, n-Propyl, iso-Propyl, n-Butyl, iso-Butyl, sec.-Butyl und tert.-Butyl, wobei unverzweigtes C₁-C₄-Alkyl bevorzugt ist, besonders bevorzugt ist Methyl.

Bei Polydialkylsiloxan (g) und vorzugsweise bei Polydimethylsiloxan (g) handelt es sich vorzugsweise um unverzweigte Polysiloxane mit Si-O-Si-Ketten oder um solche Polysiloxane, die bis zu 3, bevorzugt maximal eine Verzweigung pro Molekül aufweisen.

Polydialkylsiloxan (D) und insbesondere Polydimethylsiloxan (g) kann eine oder mehrere Si(C₁-C₄-Alkyl)₂-OH-Gruppen aufweisen.

In einer Ausführungsform der vorliegenden Erfindung enthält wässrige Polyurethandispersion
insgesamt im Bereich von 20 bis 30 Gew.-% Polyurethan (PU), bzw. insgesamt im Bereich von 20 bis 30 Gew.-% Polyurethane (PU1) und (PU2),
gegebenenfalls im Bereich von 1 bis 10, bevorzugt 2 bis 5 Gew.-% Härter, gegebenenfalls im Bereich von 1 bis 10 Gew.-% Silikonverbindung (f),
im Bereich von null bis 10, bevorzugt 0,5 bis 5 Gew.-% Polydialkylsiloxan (g).

In einer Ausführungsform der vorliegenden Erfindung enthält wässrige Polyurethandispersion
im Bereich von 10 bis 30 Gew.-% weiches Polyurethan (PU1) und
im Bereich von null bis 20 Gew.-% hartes Polyurethan (PU2).

In einer Ausführungsform der vorliegenden Erfindung weist wässrige Polyurethandispersion einen Feststoffgehalt von insgesamt 5 bis 60 Gew.-% auf, bevorzugt 10 bis 50 Gew.-% und besonders bevorzugt 25 bis 45 Gew.-%.

Dabei bezeichnen Angaben in Gew.-% jeweils den Wirkstoff bzw. Feststoff und sind auf die gesamte wässrige Polyurethandispersion bezogen. Der zu 100 Gew.-% fehlende Rest ist vorzugsweise kontinuierliche Phase, beispielsweise Wasser oder ein Gemisch von einem oder mehreren organischen Lösemitteln und Wasser.

In einer Ausführungsform der vorliegenden Erfindung enthält wässrige Polyurethandispersion mindestens einen Zusatz (h), gewählt aus Pigmenten, Mattierungsmitteln, Lichtschutzmitteln, Antistatika, Antisoil, Antiknarz, Verdickungsmitteln, insbesondere Verdickungsmitteln auf Basis von Polyurethanen, und Mikrohohlkugeln.

In einer Ausführungsform der vorliegenden Erfindung enthält wässrige Polyurethandispersion insgesamt bis zu 20 Gew.-% an Zusätzen (h).

Wässrige Polyurethandispersion kann außerdem ein oder mehrere organische Lösemittel enthalten. Geeignete organische Lösemittel sind beispielsweise Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol") und Triethylenglykol-n-butylether ("Butyltriglykol").

Zur Herstellung von wässrigen Polyurethandispersionen kann man Polyurethan (PU), Härter und Silikonverbindung (f) mit Wasser und gegebenenfalls einem oder mehreren der vorstehend genannten organischen Lösemittel vermischen. Weiterhin vermischt man, falls gewünscht, mit Polydialkylsiloxan (g) und Zusätzen (h). Das Vermischen kann man beispielsweise durch Verrühren durchführen. Dabei ist die Reihenfolge der Zugabe von Polyurethan (PU), Härter, Silikonverbindung (f) und Wasser und gegebenenfalls einem oder mehreren der vorstehend genannten organischen Lösemittel sowie - falls gewünscht - Polydialkylsiloxan (g) und Zusätzen (h) beliebig.

Bevorzugt geht man von einem in Wasser oder einem Gemisch aus Wasser und organischem Lösemittel dispergierten Polyurethan (PU) oder von dispergiertem weichem Polyurethan (PU1) und hartem Polyurethan (PU2) aus und gibt, vorzugsweise unter Rühren, Härter und Silikonverbindung (f) sowie, falls gewünscht, Polydialkylsiloxan (g) und gegebenenfalls ein oder mehrere organische Lösemittel zu. Vorzugsweise unterlässt man jedoch die Zugabe von organischem Lösemittel.

In einer speziellen Ausführungsform gibt man Verdickungsmittel als Beispiel für einen Zusatz (h) als letztes zu und stellt so die gewünschte Viskosität der wässrigen Polyurethandispersion ein.

Nach dem Aushärten der Polyurethanschicht (D) trennt man sie von der Matrize, beispielsweise durch Abziehen, und erhält einen Polyurethanfilm (D), der in erfindungsgemäßem mehrschichtigem Verbundmaterial die Polyurethanschicht (D) bildet.

In einem weiteren Arbeitsgang des erfindungsgemäßen Herstellverfahrens bringt man vorzugsweise organischen Klebstoff auf den Polyurethanfilm (D) oder die Kombination aus Flächengebilde (A) und absorptionsfähigem Material (B) auf, und zwar nicht vollflächig, beispielsweise in Form von Punkten oder Streifen. In einer Variante der vorliegenden Erfindung bringt man einen vorzugsweise organischen Klebstoff auf Polyurethanfilm (D) und einen vorzugsweise organischen Klebstoff auf die Kombination aus Flächengebilde (A) und absorptionsfähigem Material (B) auf, wobei sich die beiden Klebstoffe unterscheiden, beispielsweise durch einen oder mehrere Zusätze oder dadurch, dass es sich um chemisch verschiedene vorzugsweise organische Klebstoffe handelt. Anschließend verbindet man Polyurethanfilm (D) und die Kombination aus Flächengebilde (A) und absorptionsfähigem Material (B), und zwar so, dass die Schicht(en) von Klebstoff zwischen Polyurethanfilm (D) und die Kombination aus Flächengebilde (A) und absorptionsfähigem Material (B) zu liegen kommen. Man härtet den Klebstoff bzw. die Klebstoffe aus, beispielsweise thermisch, durch aktinische Strahlung oder durch Alterung, und erhält erfindungsgemäßes mehrschichtiges Verbundmaterial.

In einer Ausführungsform der vorliegenden Erfindung platziert man eine Zwischenschicht (E) zwischen absorptionsfähigem Material (B) und Verbindungsschicht (C), zwischen Verbindungsschicht (C) und Polyurethanschicht (D) oder zwischen zwei Verbindungsschichten (C).

Die Zwischenschicht (E) ist wie vorstehend definiert.

Das Platzieren kann manuell oder maschinell erfolgen, kontinuierlich oder diskontinuierlich.

Ein weiterer Gegenstand der vorliegenden Erfindung ist die Verwendung von erfindungemäßen mehrschichtigen Verbundmaterialien zur Herstellung von Sitzen. Sitze sind beispielsweise Sitze für Transportmittel wie Boote, Automobile, Flugzeuge, Eisenbahnen, Straßenbahnen, Busse und insbesondere in Kindersitzen. Ein weiterer Gegenstand der vorliegenden Erfindung ist ein Verfahren zur Herstellung von Sitzen unter Verwendung von erfindungsgemäßen mehrschichtigen Verbundmaterialien. Ein weiterer Gegenstand der vorliegenden Erfindung sind Sitze, umfassend ein erfindungsgemäßes mehrschichtiges Verbundmaterial. Auf Oberflächen von erfindungsgemäßen Sitzen scheidet sich nur wenig Schweiß ab, Feuchtigkeit und auch andere Flüssigkeiten werden aufgesaugt.

Auch an weiteren Stellen im Innenraum von Fahrzeugen lässt sich erfindungsgemäßes mehrschichtiges Verbundmaterial vorteilhaft anwenden, beispielsweise bei Lenkrädern, Armlehnen, Dachhimmel, Innenraum-Verkleidungsstücken, Mittelkonsolen, Hutablagen und Armaturenbrettern. Weiterhin lässt sich erfindungsgemäßes mehrschichtiges Verbundmaterial vorteilhaft zum Raumklimamanagement verwenden. Das Raumklimamanagement wird dadurch bewirkt, dass erfindungsgemäße mehrschichtige Verbundmaterialien in feuchter Umgebung Feuchtigkeit aufnehmen (absorbieren) und in trockener Umgebung wieder abgeben (desorbieren), also für ein gleichmäßig feuchtes Klima sorgen können. Ein weiterer Gegenstand der vorliegenden Erfindung ist somit die Verwendung von erfindungsgemäßen mehrschichtigen Verbundmaterialien zum Raumklimamanagement.

Eine weiterer Gegenstand der vorliegenden Erfindung ist die Verwendung von erfindungsgemäßen mehrschichtigen Verbundmaterialien in Sportartikeln, beispielsweise Sporttaschen, Rucksäcken, Schlägern wie beispielsweise Tennis- oder Hockeyschlägern, Sportschuhen. Eine weiterer Gegenstand der vorliegenden Erfindung ist die Verwendung von erfindungsgemäßen mehrschichtigen Verbundmaterialien in elektrischen Geräten und ihren Verpackungen, beispielsweise Mobiltelefonen und Hüllen für Mobiltelefone, Spielekonsolen, Keyboards (Tastaturen) für Computer. Ein weiterer Gegenstand der vorliegenden Erfindung ist die Verwendung von erfindungsgemäßen mehrschichtigen Verbundmaterialien zur Herstellung von Möbeln, beispielsweise Sofas, Liegemöbel wie Liegen, Sessel und Stühle. Ein weiterer Gegenstand der vorliegenden Erfindung ist die Verwendung von erfindungsgemäßen Verbundmaterialien als oder zur Herstellung von Elementen für den Innenraum von Gebäuden, beispielsweise Vorhänge, Gardinen und Wandverkleidungen.

Die Erfindung wird durch Arbeitsbeispiele weiter erläutert.
I. Herstellung der Ausgangsmaterialien
I.1 Herstellung einer wässrigen Polyurethandispersion Disp.1

In einem Rührgefäß vermischte man unter Rühren:
7 Gew.-% einer wässrigen Dispersion (Partikeldurchmesser: 125 nm, Feststoffgehalt: 40%) eines weichen Polyurethans (PU1.1), hergestellt aus Hexamethylendiisocyanat (a1.1) und Isophorondiisocyanat (a1.2) im Gew.-Verhältnis 13:10 als Diisocyanate und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), sowie 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1),

Erweichungspunkt von weichem Polyurethan (PU1.1): 62°C, Erweichung beginnt bei 55°C, Shore-Härte A 54,

65 Gew.-% einer wässrigen Dispersion (Partikeldurchmesser: 150 nm) eines harten Polyurethans (PU2.2), erhältlich durch Umsetzung von Isophorondiisocyanat (a1.2), 1,4-Butandiol, 1,1-Dimethylolpropionsäure, Hydrazinhydrat und Polypropylenglykol mit einem Molekulargewicht M_{w} von 4200 g/mol, Erweichungspunkt von 195°C, Shore-Härte A 86,

3,5 Gew.-% einer 70 Gew.-% Lösung (in Propylencarbonat) von Verbindung (V.1),

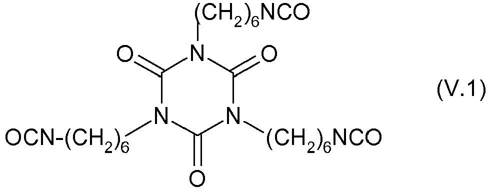

6 Gew.-% einer 65 Gew.-% wässrigen Dispersion der Silikonverbindung nach Beispiel 2 aus EP-A 0 738 747 (f.1)
2 Gew.-% Ruß,
0,5 Gew.-% eines Verdickungsmittels auf Polyurethanbasis,
1 Gew.-% Mikrohohlkugeln aus Polyvinylidenchlorid, gefüllt mit Isobutan, Durchmesser 20 µm, kommerziell erhältlich z. B. als Expancel® der Fa. Akzo Nobel.

Man erhielt wässrige Dispersion Disp.1 mit einem Feststoffgehalt von 35% und einer kinematischen Viskosität von 25 Sek. bei 23°C, bestimmt nach DIN EN ISO 2431, Stand Mai 1996.

### I.2 Herstellung einer wässrigen Formulierung Disp.2

In einem Rührgefäß vermischte man unter Rühren:
7 Gew.-% einer wässrigen Dispersion (Partikeldurchmesser: 125 nm), Feststoffgehalt: 40%) eines weichen Polyurethans (PU1.1), hergestellt aus Hexamethylendiisocyanat (a1.1) und Isophorondiisocyanat (a1.2) im Gew.-Verhältnis 13:10 als Diisocyanate und und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1),
Erweichungspunkt von 62°C, Erweichung beginnt bei 55°C, Shore-Härte A 54, 65 Gew.-% einer wässrigen Dispersion (Partikeldurchmesser: 150 nm) eines harten Polyurethans (α2.2), erhältlich durch Umsetzung von Isophorondiisocyanat (a1.2), 1,4-Butandiol (PU1.2), 1,1-Dimethylolpropionsäure, Hydrazinhydrat und Polypropylenglykol mit einem Molekulargewicht M_{w} von 4200 g/mol (b1.3), Polyurethan (PU2.2) hatte einen Erweichungspunkt von 195°C, Shore-Härte A 90,
3,5 Gew.-% einer 70 Gew.-% Lösung (in Propylencarbonat) von Verbindung (V.1), NCO-Gehalt 12%, 2 Gew.-% Ruß.

Man erhielt eine Polyurethandispersion Disp.2 mit einem Feststoffgehalt von 35% und einer kinematischen Viskosität von 25 Sek., bestimmt nach bei 23°C nach DIN EN ISO 2431, Stand Mai 1996.

### I.3 Herstellung einer Kombination aus textilem Flächengebilde (A) und Superabsorber (B)

Auf ein Polyethylenterephthalt-Vlies (A.1) mit einem Flächengewicht von 70 g/m² wurde eine Monomerlösung aufgesprüht und 2 Minuten mittels UV-Strahlung gehärtet. Anschließend wurde für 5 Minuten bei 90°C in einem Gegenstromtrockner getrocknet.

Die Monomerlösung enthielt
19,6 kg einer 37,5 Gew.-% wässrigen Natriumacrylatlösung (entsprechend 24,5 Gew.-% Natriumacrylat in der gesamten Monomerlösung),
435 g Acrylsäure (8,5 Gew.-%),
900 g Polyethylenglykoldiacrylat (Diacrylat eines Polyethylenglykols mit einem mittleren Molekulargewicht Mₙ von 400 g/mol) (3 Gew.-%) als Vernetzer, 66 g 2-Hydroxy-1-[4-(hydroxyethoxy)phenyl]- 2-methyl-1-propanon (0,22 Gew.-%) als Initiator,
1500 g Glycerin [5 Gew.-%) und
7500 g einer 25 Gew.-% wässrigen Natriumchloridlösung (6,25 Gew.-% NaCl).

Die Menge an Monomerlösung wurde so gewählt, dass die Beladung des Polyethylenterephthalat-Vlieses (A.1) mit aufpolymerisiertem wasserabsorbierendem Polymer (B.1) 160 g/m² betrug, kurz auch "Kombination von textilem Flächengebilde (A.1) und Superabsorber (B.1)" genannt.

### II. Herstellung einer Matrize

Ein flüssiges Silikon wurde auf eine Unterlage gegossen, die das Muster eines vollnarbigen Kalbsleders aufwies. Man ließ aushärten, indem man eine Lösung von Di-n-butylbis(1-oxoneodecyloxy)stannan als 25 Gew.-% Lösung in Tetraethoxysilan als sauren Härter dazu gab, und erhielt eine im Mittel 2 mm starke Silikonkautschukschicht, die als Matrize diente. Die Matrize wurde auf einen 1,5 mm dicken Aluminiumträger aufgeklebt.

### III. Auftragung von wässrigen Polyurethandispersionen auf Matrize aus II.

Die Matrize aus II. wurde auf eine beheizbare Unterlage gelegt und auf 91°C erwärmt. Anschließend wurde durch eine Sprühdüse Disp.1 aufgesprüht, und zwar 88 g/m² (nass). Das Auftragen erfolgte ohne Luftbeimengung mit einer Sprühdüse, die einen Durchmesser von 0,46 mm besaß, bei einem Druck von 65 bar. Man ließ bei 91°C verfestigen, bis die Oberfläche nicht mehr klebrig war.

Die Sprühdüse war in einer Höhe von 20 cm von der durchlaufenden Unterlage in Bewegungsrichtung derselben mobil angeordnet und bewegte sich quer zu der Bewegungsrichtung der Unterlage. Die Unterlage hatte nach etwa 14 Sekunden die Sprühdüse passiert und besaß eine Temperatur von 59°C. Nach einer etwa zweiminütigen Beaufschlagung mit trockener, 85°C warmer Luft war der so hergestellte, netzartig aussehende Polyurethanfilm (D.1) nahezu wasserfrei.

In einer analogen Anordnung wurde unmittelbar im Anschluss auf die so beschichtete Matrize 50 g/m² nass von Disp.2 als Verbindungsschicht (C.1) aufgetragen und anschließend trocknen gelassen. Die Verbindungsschicht (C.1) war nicht geschlossen.

Man erhielt eine mit Polyurethanfilm (D.1) und Verbindungsschicht (C.1) beschichtete Matrize.

### IV. Herstellung eines erfindungsgemäßen mehrschichtigen Verbundmaterials

Anschließend wurde die Kombination von textilem Flächengebilde (A.1) und Superabsorber (B.1) mit der besprühten Seite auf die noch warme Verbindungsschicht (C.1), die sich zusammen mit Polyurethanfilm (D.1) auf der Matrize befand, gelegt und in einer Presse bei 4 bar und 110°C für 15 Sekunden verpresst. Anschließend entnahm man das so erhaltene erfindungsgemäße mehrschichtige Verbundmaterial MSV.1 aus der Presse und entfernte die Matrize.

Das so erhaltene erfindungsgemäße mehrschichtige Verbundmaterial MSV.1 zeichnete sich aus durch eine angenehme Haptik, eine Optik, die identisch mit einer Lederoberfläche war, sowie Atmungsaktivität aus.

MSV.1 wurde im Klimaschrank genau definierten Bedingen unterworfen, indem es zunächst für 60 Minuten bei 23°C und 50% Luftfeuchte bis zur Einstellung des Gleichgewichtes konditioniert wurde, anschließend bei 90 Minuten bei 30°C und 95% Luftfeuchte und schließlich für 100 Minuten bei 40°C und 40% Luftfeuchte gelagert wurde. Während der Lagerung wurde durch eine Waage die Gewichtszunahme von MSV.1 durch die Aufnahme von Wasser verfolgt. Die Ergebnisse sind unten dargestellt. Es zeigte sich, dass trotz Polyurethanschicht (D.1) MSV.1 eine große Fähigkeit zur Wasseraufnahme aufwies.

| | |
|---|---|
| Wasseraufnahmen nach 90 Minuten: | 65 g/m² |
| Höchste gemessene Wasseraufnahme: | 71 g/m² |
| Abnahme nach 100 Minuten: | 50 g/m² |

## Patentansprüche

1. Mehrschichtiges Verbundmaterial, umfassend als Komponenten:
(A) Ein textiles Flächengebilde,
(B) ein Material, welches Wasser oder wässrige Flüssigkeiten absorbieren kann,
(C) mindestens eine Verbindungsschicht aus Polyurethanen mit einer Glastemperatur unter 0°C, und
(D) eine Polyurethanschicht, die Kapillaren aufweist, die über die gesamte Dicke der Polyurethanschicht gehen,
wobei die Polyurethanschicht (D) an mindestens einer Stelle direkt mit Flächengebilde (A) oder absorptionsfähigem Material (B) in Berührung kommt,
wobei die Polyurethanschicht (D) eine Dicke von 15 bis 300 µm aufweist und eine Musterung aufweist,
wobei es sich bei Material (B), welches Wasser oder wässrige Flüssigkeiten absorbieren kann, um einen Superabsorber (B) handelt, und
wobei es sich bei dem Superabsorber (B) um ein organisches Copolymer handelt, das auf Flächengebilde (A) aufpolymerisiert ist.

2. Mehrschichtiges Verbundmaterial nach Anspruch 1, **dadurch gekennzeichnet, dass** die wässrige Polyurethandispersion zur Herstellung von Polyurethanschicht (D) mindestens ein Polyurethan umfasst, das mindestens ein Polycarbonatdiol enthält.

3. Mehrschichtiges Verbundmaterial nach Anspruch 1 oder 2, **dadurch gekennzeichnet, dass** es sich bei dem textilen Flächengebilde (A) um ein Gewebe oder einen Vliesstoff aus Polyester handelt.

4. Mehrschichtiges Verbundmaterial nach einem der Ansprüche 1 bis 3, **dadurch gekennzeichnet, dass** es sich bei der Verbindungsschicht (C) um eine Schicht eines gehärteten organischen Klebstoffs handelt.

5. Mehrschichtiges Verbundmaterial nach einem der Ansprüche 1 bis 4, **dadurch gekennzeichnet, dass** die Polyurethanschicht (D) eine samtartige Erscheinung aufweist.

6. Mehrschichtiges Verbundmaterial nach einem der Ansprüche 1 bis 5, **dadurch gekennzeichnet, dass** es sich bei der Verbindungsschicht (C) um eine durchbrochene Schicht eines gehärteten organischen Klebstoffs handelt.

7. Mehrschichtiges Verbundmaterial nach einem der Ansprüche 1 bis 6, **dadurch gekennzeichnet, dass** es zusätzlich mindestens eine Zwischenschicht (E) umfasst, die zwischen absorptionsfähigem Material (B) und Verbindungsschicht (C), zwischen Verbindungsschicht (C) und Polyurethanschicht (D) oder zwischen zwei Verbindungsschichten (C) liegt, wobei Zwischenschicht (E) gewählt wird aus Textil, Papier, Vliesstoffen und offenzelligem Schaumstoff.

8. Verfahren zur Herstellung von mehrschichtigen Verbundmaterialien nach einem der Ansprüche 1 bis 7, **dadurch gekennzeichnet, dass** man ein Material (B), welches Wasser oder wässrige Flüssigkeiten absorbieren kann, mit einem Flächengebilde (A) verbindet, mit Hilfe einer Matrize eine Polyurethanschicht (D) bildet, mindestens einen organischen Klebstoff vollflächig oder partiell auf mit absorptionsfähigem Material (B) verbundenen Flächengebilde (A) und/oder auf Polyurethanschicht (D) aufbringt und dann Polyurethanschicht (D) mit dem mit absorptionsfähigem Material (B) kombinierten Flächengebilde (A) punktförmig, streifenartig oder flächig verbindet.

9. Verfahren nach Anspruch 8, **dadurch gekennzeichnet, dass** man Polyurethanschicht (D) mit Hilfe einer Silikonmatrize bildet.

10. Verfahren nach Anspruch 8 oder 9, **dadurch gekennzeichnet, dass** es sich bei der Silikonmatrize um eine mit Hilfe von Lasergravur strukturierte Silikonmatrize handelt.

11. Verfahren nach einem der Ansprüche 8 bis 10, dass man zur Strukturierung der Matrize mit Hilfe eines Lasers Näpfchen in die Matrize einarbeitet, die eine mittlere Tiefe im Bereich von 50 bis 250 µm aufweisen und einen Mittenabstand im Bereich von 50 bis 250 µm.

12. Verfahren nach einem der Ansprüche 8 bis 11, **dadurch gekennzeichnet, dass** man eine Zwischenschicht (E) zwischen absorptionsfähigem Material (B) und Verbindungsschicht (C), zwischen Verbindungsschicht (C) und Polyurethanschicht (D) oder zwischen zwei Verbindungsschichten (C) platziert.

13. Sitze, umfassend ein mehrschichtiges Verbundmaterial nach einem der Ansprüche 1 bis 7.

14. Verwendung von mehrschichtigen Verbundmaterialien nach einem der Ansprüche 1 bis 7 zum Raumklimamanagement.

15. Verwendung von mehrschichtigen Verbundmaterialien nach einem der Ansprüche 1 bis 7 im Innenraum von Fahrzeugen.

## Claims

1. Multilayered composite material comprising as components:
(A) a textile sheet material,
(B) a material capable of absorbing water or aqueous fluids,
(C) at least one bonding layer consisting of polyurethanes having a glass transition temperature below 0°C, and
(D) a polyurethane layer with capillaries passing through the entire thickness of the polyurethane layer,
wherein the polyurethane layer (D) comes into direct contact with sheet material (A) or absorption-capable material (B) in at least one place,
wherein the polyurethane layer (D) has a thickness of from 15 to 300 µm and exhibits patterning,
wherein the material (B), capable of absorbing water or aqueous fluids, comprises a superabsorbent (B), and
wherein the superabsorbent (B) comprises an organic copolymer polymerized onto said sheet material (A).

2. Multilayered composite material according to Claim 1, **characterized in that** the aqueous polyurethane dispersion for preparing polyurethane layer (D) comprises at least one polyurethane containing at least one polycarbonate diol.

3. Multilayered composite material according to Claim 1 or 2, **characterized in that** the textile sheet material (A) comprises a woven or nonwoven fabric of polyester.

4. Multilayered composite material according to any one of Claims 1 to 3, **characterized in that** the bonding layer (C) comprises a layer of a cured organic adhesive.

5. Multilayered composite material according to any one of Claims 1 to 4, **characterized in that** said polyurethane layer (D) has a velvetlike appearance.

6. Multilayered composite material according to any one of Claims 1 to 5, **characterized in that** the bonding layer (C) comprises an interrupted layer of a cured organic adhesive.

7. Multilayered composite material according to any one of Claims 1 to 6, **characterized in that** it additionally comprises at least one interlayer (E) disposed between absorption-capable material (B) and bonding layer (C), between bonding layer (C) and polyurethane layer (D) or between two bonding layers (C), wherein interlayer (E) is selected from textile, paper, batt materials and open-cell foam.

8. Process for producing multilayered composite materials according to any one of Claims 1 to 7, **characterized in that** it comprises bonding a material (B), capable of absorbing water or aqueous fluids, to a sheet material (A), forming a polyurethane layer (D) with the aid of a mould, applying at least one organic adhesive uniformly or partially onto sheet material (A) bonded to absorption-capable material (B) and/or onto polyurethane layer (D) and then bonding polyurethane layer (D) pointwise, stripwise or areawise to the sheet material (A) combined with said absorption-capable material (B).

9. Process according to Claim 8, **characterized in that** said polyurethane layer (D) is formed with the aid of a silicone mould.

10. Process according to Claim 8 or 9, **characterized in that** the silicone mould comprises a silicone mould structured with the aid of laser engraving.

11. Process according to any one of Claims 8 to 10, **characterized in that** said mould is structured by using a laser to cut wells into the mould which have an average depth in the range from 50 to 250 µm and a centre-to-centre spacing in the range from 50 to 250 µm.

12. Process according to any one of Claims 8 to 11, **characterized in that** an interlayer (E) is placed between said absorption-capable material (B) and said bonding layer (C), between said bonding layer (C) and polyurethane layer (D), or between two bonding layers (C).

13. Seat comprising a multilayered composite material according to any one of Claims 1 to 7.

14. Use of multilayered composite materials according to any one of Claims 1 to 7 for indoor air management.

15. Use of multilayered composite materials according to any one of Claims 1 to 7 in a vehicle interior.

## Revendications

1. Matériau composite multicouche, comprenant en tant que composants :
(A) une structure textile plate,
(B) un matériau, qui peut absorber l'eau ou les liquides aqueux,
(C) au moins une couche de liaison à base de polyuréthanes ayant une température de transition vitreuse inférieure à 0 °C, et
(D) une couche de polyuréthane qui comprend des capillaires, qui s'étendent sur l'épaisseur totale de la couche de polyuréthane,
la couche de polyuréthane (D) étant à au moins un emplacement en contact direct avec la structure plate (A) ou le matériau absorbant (B),
la couche de polyuréthane (D) présentant une épaisseur de 15 à 300 µm et présentant un motif,
le matériau (B), qui peut absorber l'eau ou les liquides aqueux, étant un superabsorbant (B), et
le superabsorbant (B) étant un copolymère organique qui est polymérisé sur la structure plate (A).

2. Matériau composite multicouche selon la revendication 1, **caractérisé en ce que** la dispersion de polyuréthane aqueuse pour la fabrication de la couche de polyuréthane (D) comprend au moins un polyuréthane qui contient au moins un polycarbonate-diol.

3. Matériau composite multicouche selon la revendication 1 ou 2, **caractérisé en ce que** la structure textile plate (A) est un tissu ou un non-tissé en polyester.

4. Matériau composite multicouche selon l'une quelconque des revendications 1 à 3, **caractérisé en ce que** la couche de liaison (C) est une couche d'un adhésif organique durci.

5. Matériau composite multicouche selon l'une quelconque des revendications 1 à 4, **caractérisé en ce que** la couche de polyuréthane (D) présente une apparence veloutée.

6. Matériau composite multicouche selon l'une quelconque des revendications 1 à 5, **caractérisé en ce que** la couche de liaison (C) est une couche interrompue d'un adhésif organique durci.

7. Matériau composite multicouche selon l'une quelconque des revendications 1 à 6, **caractérisé en ce qu'**il comprend en outre au moins une couche intermédiaire (E), qui se situe entre le matériau absorbant (B) et la couche de liaison (C), entre la couche de liaison (C) et la couche de polyuréthane (D) ou entre deux couches de liaison (C), la couche intermédiaire (E) étant choisie parmi un textile, un papier, des non-tissés et une mousse à cellules ouvertes.

8. Procédé de fabrication de matériaux composites multicouches selon l'une quelconque des revendications 1 à 7, **caractérisé en ce qu'**un matériau (B), qui peut absorber l'eau ou les liquides aqueux, est relié avec une structure plate (A), une couche de polyuréthane (D) est formée à l'aide d'une matrice, au moins un adhésif organique est appliqué sur l'ensemble de la surface ou en partie sur la structure plate (A) reliée avec le matériau absorbant (B) et/ou sur la couche de polyuréthane (D), puis la couche de polyuréthane (D) est reliée sous forme ponctuelle, sous la forme de bandes ou sur l'ensemble de la surface avec la structure plate (A) combinée avec le matériau absorbant (B) .

9. Procédé selon la revendication 8, **caractérisé en ce que** la couche de polyuréthane (D) est formée à l'aide d'une matrice de silicone.

10. Procédé selon la revendication 8 ou 9, **caractérisé en ce que** la matrice de silicone est une matrice de silicone structurée à l'aide d'une gravure laser.

11. Procédé selon l'une quelconque des revendications 8 à 10, **caractérisé en ce que** des petites cavités, qui présentent une profondeur moyenne dans la plage allant de 50 à 250 µm et un écart moyen dans la plage allant de 50 à 250 µm, sont incorporées dans la matrice pour la structuration de la matrice à l'aide d'un laser.

12. Procédé selon l'une quelconque des revendications 8 à 11, **caractérisé en ce qu'**une couche intermédiaire (E) est placée entre le matériau absorbant (B) et la couche de liaison (C), entre la couche de liaison (C) et la couche de polyuréthane (D) ou entre deux couches de liaison (C).

13. Sièges, comprenant un matériau composite multicouche selon l'une quelconque des revendications 1 à 7.

14. Utilisation de matériaux composites multicouches selon l'une quelconque des revendications 1 à 7 pour la gestion du climat intérieur.

15. Utilisation de matériaux composites multicouches selon l'une quelconque des revendications 1 à 7 dans l'espace intérieur de véhicules.
